# EUROPEAN PATENT APPLICATION

(11) **EP 0 782 324 A1**
(43) Date of publication of application: **02.07.1997**
(21) Application number: 96923072.1
(22) Date of filing: 12.07.1996
(51) Int. Cl.: H04N 1/387

(54) **RECEIVER, TRANSMISSION/RECEPTION METHOD, INFORMATION STORAGE, TELEVISION RECEIVER, AND INFORMATION STORING METHOD**

(30) Priority: 17.07.1995 JP 179821/95; 13.10.1995 JP 265180/95
(71) Applicant: MATSUSHITA ELECTRIC INDUSTRIAL CO., LTD., Kadoma-shi, Osaka-fu, 571 (JP)
(72) Inventor: MATSUURA, Satoshi 3-15, Yamasaka 5-chome, Osaka 546 (JP); IMANAKA, Takeshi, Nara 631 (JP)
(74) Representative: Grünecker, Kinkeldey, Stockmair & Schwanhäusser Anwaltssozietät
(86) International application number: JP9601945
(87) International publication number: WO9704586

(57) **Abstract**

It is an object of the invention to provide a receiving device, a transmission/reception method, an information storage device, a television broadcasting receiving device, and an information storage method which can transmit multimedia information and the like by using a simple conventional communication apparatus such as a facsimile apparatus. In order to attain the object, as shown in, for example, Fig. 10, a television broadcasting receiving device has: telephone image receiving means 61 which receives image information including a sketch identifier for identifying a sketch and which is connected to a telephone line; a sketch identifier fetch process 44 in which the sketch identifier is fetched from the received image information; a sketch retrieval process 45 in which, by using the sketch identifier, the corresponding sketch is retrieved from sketch storing means 42 in which sketch data are stored; a sketch combination process 46 in which the obtained sketch is combined with the portion of the image information other than the sketch identifier; television displaying means 33 for displaying the combined image; and the like.

## Description

### Technical Field

The invention relates to a receiving device, a transmission/reception method, an information storage device, a television broadcasting receiving device, and an information storage method which can be used in, for example, a communication technique using a facsimile apparatus.

### Background Art

Recently, as means for enabling communication between remote places to be performed naturally and actively and a technique relating to an expression form, multimedia communications are widely dealt. In multimedia communications, when multimedia information such as a color image, a sound, or a moving image is skillfully used, the thought of the sender or a massage can be transmitted more clearly to the receiver.

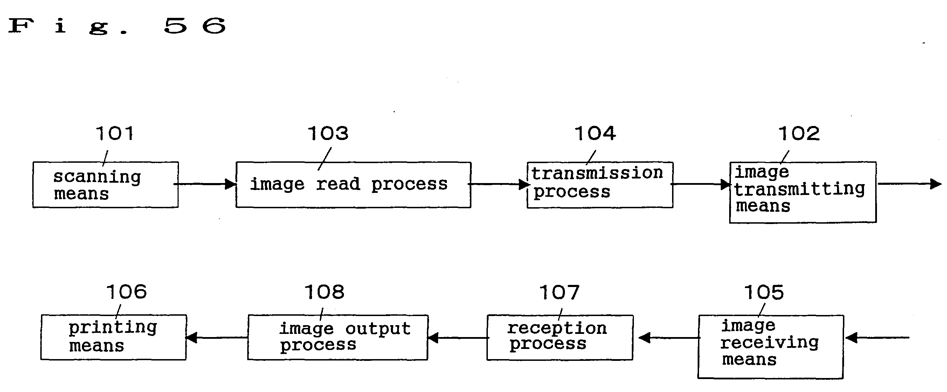

Generally, as elements constituting communications, there are three elements, i.e., information contents, transmission means, and a terminal apparatus. In multimedia communications, multimedia information such as that described above is handled as information contents. As transmission means, a telephone line or an ISDN can be used at present. An available terminal apparatus includes a personal computer and a facsimile apparatus. A personal computer has a high-performance CPU, a graphic device, and a sound generator. Consequently, a personal computer is relatively excellent in handling multimedia information. However, fundamental operations and the input operation must be conducted through a keyboard or a mouse. As compared with a usual home electrical appliance, therefore, the operation of a personal computer is so complicated that, for usual persons except some persons who are skilled in operating a computer, it is difficult to daily use a personal computer. By contrast, a facsimile apparatus can easily transmit a document or a hand-written message, only by inserting a document to be transmitted into the apparatus and then inputting a telephone number of the destination. Because of such easy operation, users of a relatively wide range accept a facsimile apparatus. Facsimile apparatuses become widespread in usual homes because of such easy operation and expansion of services such as a FAX information service and reception of requests in an FM station. As the prior art, the configuration of a facsimile apparatus is shown in Fig. 56. In Fig. 56, 101 denotes scanning means for optically reading a document, 102 denotes image transmitting means for transmitting an image through a telephone line, 103 denotes an image read process in which a document read by the scanning means 101 is facsimile-coded, and 104 denotes a transmission process in which the coded document is transmitted by the image transmitting means 102. Furthermore, 105 denotes image receiving means for receiving an image sent through the telephone line, 106 denotes printing means for outputting the received image onto a paper sheet, 107 denotes an image reception process in which a facsimile-coded data is received by the image receiving means 105, and 108 denotes an image output process in which the original image is reproduced from the received facsimile-coded data and the reproduced image is output by the printing means 106. According to this technique, as compared with other communication means such as mail, information of a document or an image can be transmitted at a lower cost, more easily, and more rapidly.

However, a conventional facsimile apparatus has a problem in that a document of a monochrome still image can be transmitted but multimedia information including a sound, a color image, and a moving image cannot be handled. In order to make users of a wide range accept multimedia communications, therefore, it has been requested to create a communication method which can handle also multimedia information adequate for a personal computer, by using a communication apparatus such as a facsimile apparatus that is convenient to use.

### Disclosure of Invention

In view of the problem of the prior art, it is an object of the invention to provide a receiving device, a transmission/reception method, an information storage device, a television broadcasting receiving device, and an information storage method which can transmit multimedia information and the like by using a simple communication apparatus such as a conventional facsimile apparatus.

The invention set forth in claim 1 is a receiving device comprising: receiving means for receiving image information transmitted from a transmitting device which, from a display medium carrying a main image to be transmitted and an image of process information of the main image, reads the images on the display medium as an image information, and which transmits the read image information; process information fetching means for fetching the process information from the received image information; processing means for, on the basis of the fetched process information, processing the main image included in the image information; and outputting means for outputting the processed image.

The invention set forth in claim 13 is an information storage device comprising: receiving means for receiving inputs of a message identifier for specifying one of plural predetermined messages, a kansei (human sensibility) data identifier for specifying one of plural kansei data indicative of contents of sensibility of a person who intends to provide the message, and output date and time information which designates a date and time when the specified message and kansei data are to be output; message storing means for previously storing the plural messages with being correlated with the message identifier; kansei data storing means for previously storing the plural kansei data with being correlated with the kansei data identifier; and output controlling means for, on the basis of the received message identifier, extracting the corresponding message from the message storing means, for, on the basis of the received kansei data identifier, extracting the kansei data from the kansei data storing means, and for combining the extracted message and kansei data with each other and outputting the combined data at the date and time.

In the invention set forth in claim 1, the receiving means receives image information transmitted from a transmitting device which, from a display medium carrying a main image to be transmitted and an image of process information of the main image, reads the images on the display medium as an image information, and which transmits the read image information. The process information fetching means fetches the process information from the received image information. The processing means processes the main image included in the image information on the basis of the fetched process information. The outputting means outputs the processed image.

According to this configuration, for example, a conventional facsimile apparatus can transmit image information including process information for transmitting multimedia information, and the multimedia information can be reproduced by using the received process information.

In the invention set forth in claim 13, the receiving means receives inputs of a message identifier for specifying one of plural predetermined messages, a kansei data identifier for specifying one of plural kansei data indicative of contents of sensibility of a person who intends to provide the message, and output date and time information which designates a date and time when the specified message and kansei data are to be output. The message storing means previously stores the plural messages with being correlated with the message identifier. The kansei data storing means previously stores the plural kansei data with being correlated with the kansei data identifier. The output controlling means extracts the corresponding message from the message storing means on the basis of the received message identifier, extracts the corresponding kansei data from the kansei data storing means on the basis of the received kansei data identifier, combines the extracted message and kansei data with each other, and outputs the combined data at the date and time.

According to this configuration, when a message identifier, a kansei identifier, and an output date and time are once designated, for example, a message in which a message and a kansei data are combined with each other can be displayed at the designated date and time. Therefore, also communications with a person who is not at the site can be successfully achieved.

### Brief Description of Drawings

Fig. 1 is a block diagram showing the system configuration of a receiving device in an embodiment of the invention.

Fig. 2 is a diagram showing an example of the hardware configuration of the embodiment.

Fig. 3 is a block diagram showing the system configuration of a transmitting device in an embodiment of the invention.

Fig. 4 is a diagram showing an example of the hardware configuration of the embodiment.

Fig. 5 is a flowchart showing the operation procedure of the transmitting device of the embodiment.

Fig. 6 is a view showing an example of an input image data in the embodiment.

Fig. 7 is a view showing correlation between a sketch identifier and a sketch in the embodiment.

Fig. 8 is a flowchart showing the operation procedure of the transmitting device of the embodiment.

Fig. 9 is a view showing a display example in sketched displaying means of the embodiment.

Fig. 10 is a block diagram showing the system configuration of a television broadcasting receiving device which is an embodiment of the invention.

Fig. 11 is a diagram showing an example of the hardware configuration of the embodiment.

Fig. 12 is a flowchart showing the operation procedure of the television broadcasting receiving device in the embodiment.

Fig. 13 is a view showing a display example in television displaying means of the embodiment.

Fig. 14 is a block diagram showing the system configuration of a receiving device in an embodiment of the invention.

Fig. 15 is a diagram showing an example of the hardware configuration of the embodiment.

Fig. 16 is a flowchart showing the operation procedure of the embodiment.

Fig. 17 is a view showing an example of a manner of deciding a closed-region identifier of the embodiment.

Fig. 18 is a view showing correlation between the closed-region identifier and a coordinate data of the embodiment.

Fig. 19 is a view showing correlation between a color identifier and a color data of the embodiment.

Fig. 20 is a view showing an example of a received image of the embodiment.

Fig. 21(a) shows a circle which is colored so as to form a predetermined margin extending from a contour line to the inside, in the embodiment. Fig. 21(b) is a diagram of a data of each closed region stored in a memory in a reception side in the embodiment. Fig. 21(c) is a diagram showing a state where the image data shown in Fig. 21(b) has been converted by using a scan line seed algorithm in the embodiment. Fig. 21(d) is a diagram showing a state where the circle is colored in a predetermined color in the embodiment.

Fig. 22 is a view showing a display example in color-image displaying means of the embodiment.

Fig. 23 is a block diagram showing the system configuration of a television broadcasting receiving device in an embodiment of the invention.

Fig. 24 is a diagram showing an example of the hardware configuration of the embodiment.

Fig. 25 is a flowchart showing the operation procedure of the embodiment.

Fig. 26 is a view showing a display example in television displaying means of the embodiment.

Fig. 27 is a block diagram showing the system configuration of a receiving device in an embodiment of the invention.

Fig. 28 is a diagram showing an example of the hardware configuration of the embodiment.

Fig. 29 is a flowchart showing the operation procedure of the embodiment.

Fig. 30 is a view showing correlation between a movement identifier and an operation of the embodiment.

Fig. 31 is a view showing an example of an image to be transmitted in the embodiment.

Fig. 32 is a view showing a display example in moving-image displaying means of the embodiment.

Fig. 33 is a block diagram showing the system configuration of a television broadcasting receiving device in an embodiment of the invention.

Fig. 34 is a diagram showing an example of the hardware configuration of the embodiment.

Fig. 35 is a flowchart showing the operation procedure of the embodiment.

Fig. 36 is a view showing a display example in television displaying means of the embodiment.

Fig. 37 is a block diagram showing the system configuration of an information storage device in an embodiment of the invention.

Fig. 38 is a diagram showing an example of the hardware configuration of the embodiment.

Fig. 39 is a flowchart showing the operation procedure of the embodiment.

Fig. 40 is a view showing correlation between a kansei identifier and a kansei data of the embodiment.

Fig. 41 is a view showing correlation between a message identifier and a message data of the embodiment.

Fig. 42 is a view showing correlation between a display method identifier and a display control data of the embodiment.

Fig. 43 is a view showing a display example of the embodiment.

Fig. 44 is a block diagram showing the system configuration of a television broadcasting receiving device in an embodiment of the invention.

Fig. 45 is a diagram showing an example of the hardware configuration of the embodiment.

Fig. 46 is a flowchart showing the operation procedure of the embodiment.

Fig. 47 is a view showing a display example of the embodiment.

Fig. 48 is a block diagram showing the system configuration of a television broadcasting receiving device which is an embodiment of another invention.

Fig. 49 is a diagram showing an example of the hardware configuration of the embodiment.

Fig. 50 is a block diagram showing the system configuration of a transmitting device in the embodiment.

Fig. 51 is a diagram showing an example of the hardware configuration of the embodiment.

Fig. 52 is a flowchart showing the operation procedure of the transmitting device of the embodiment.

Fig. 53 is a view showing correlation between a message identifier and a message data of the embodiment.

Fig. 54 is a flowchart showing the operation procedure of a television broadcasting receiving device in the embodiment.

Fig. 55 is a view showing a display example in television displaying means of the embodiment.

Fig. 56 is a diagram of the configuration of a facsimile apparatus of the prior art.

### Legend of the Reference Numerals

- 2: kansei data storing means
- 3: message storing means
- 4: outputting means
- 5: information division process
- 6: kansei data retrieval process
- 7: message retrieval process
- 8: kansei/message combination process
- 11: VRAM
- 12: main storage device
- 13: auxiliary storage device
- 14: CPU
- 21: transmitting means
- 22: inputting means
- 23: kansei identifier/message identifier combination process
- 31: telephone receiving means
- 32: television broadcasting receiving means
- 33: television displaying means
- 34: call process
- 35: information reception process
- 36: display process
- 41: image receiving means
- 42: sketch storing means
- 43: sketched displaying means
- 44: sketch identifier fetch process
- 45: sketch retrieval process
- 46: sketch combination process
- 51: scanning means
- 52: image transmitting means
- 53: image read process
- 54: transmission process
- 61: telephone image receiving means
- 62: image call process
- 63: image information communication process
- 71: inputting means
- 72: information division process
- 73: display control data storing means
- 74: display control data retrieval process
- 75: display method control process
- 81: identifier fetch process
- 82: information division process
- 83: region storing means
- 84: color storing means
- 85: closed-region retrieval process
- 86: color retrieval process
- 87: image coloring process
- 88: color image displaying means
- 91: identifier fetch process
- 92: information division process
- 94: movement storing means
- 95: region designation process
- 96: movement retrieval process
- 97: movement application process
- 98: moving image displaying means
- 101: receiving means
- 102: outputting means
- 103: message storing means
- 104: message retrieval process

### Best Mode for Carrying out the Invention

Hereinafter, embodiments of the invention will be described with reference to the drawings.

### (Embodiment 1)

A receiving device of an embodiment of the invention will be described.

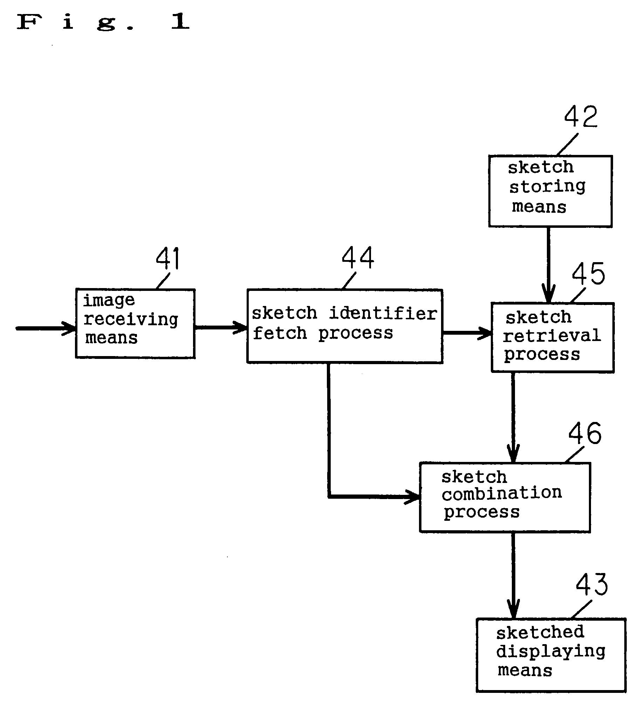

Fig. 1 is a diagram showing the system configuration of a receiving device which is an embodiment of the invention. The configuration of the embodiment will be described with reference to the figure.

In Fig. 1, image receiving means 41 serving as the receiving means of the invention is means for receiving information transmitted from a transmitting device which will be described later. The transmitting device reads a sketch identifier for identifying a sketch, and an image such as a hand-written message which the sender intends to transmit, as image information, the sketch and the image being written in given portions of a predetermined sheet. In the embodiment, the main image of the invention corresponds to the hand-written message, and the display medium of the invention corresponds to the sheet. Furthermore, the process information of the invention corresponds to the sketch identifier.

Sketch storing means 42 serving as the storing means of the invention is means for storing a sketch indicated by an image data or a sound data, and the sketch identifier with being previously correlated with each other. Sketched displaying means 43 is means for combinedly displaying the sketch and the image data. A sketch identifier fetch process 44 serving as the process information fetching means of the invention is means for receiving image information from the image receiving means 41, and for fetching the sketch identifier from a given portion of the received image information. A sketch retrieval process 45 conducts a retrieval operation on the sketch storing means 42 on the basis of the sketch identifier. A sketch combination process 46 is means for controlling the sketched displaying means 43 so as to combinedly display the sketch obtained as a result of the retrieval operation, and the portion of the image information other than the sketch identifier, i.e., the hand-written message. The processing means of the invention includes the sketch retrieval process 45 and the sketch combination process 46.

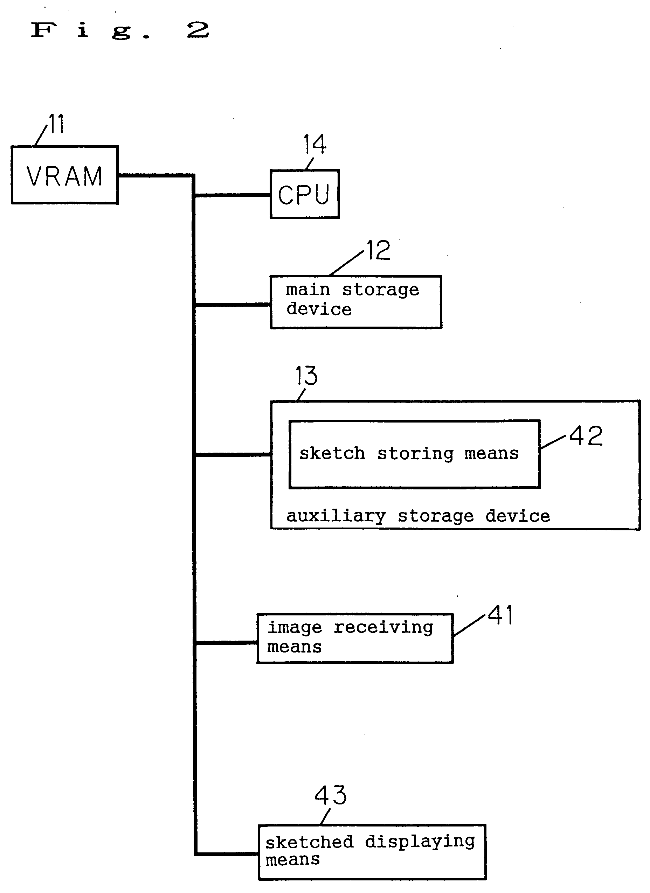

The hardware configuration in which the thus configured system is executed is shown in Fig. 2. Fig. 2 is fundamentally identical with the configuration of a general purpose computer system. Some of the components of Fig. 2 are identical with those which have been described in the system configuration shown in Fig. 1. The identical components are denoted by the same reference numerals and their description is omitted.

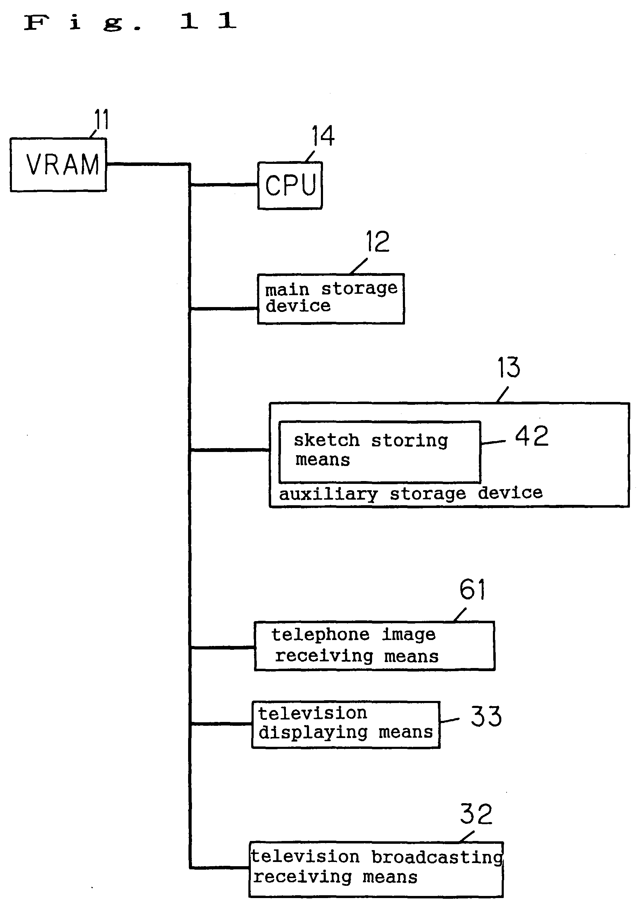

In Fig. 2, 11 denotes a VRAM which stores data to be displayed or output, 12 denotes a main storage device which is a volatile memory for storing programs, 13 denotes an auxiliary storage device which is a nonvolatile memory for storing programs and data, and 14 denotes a CPU which executes the programs stored in the main storage device 12. As described above, the hardware configuration is fundamentally identical with that of a general purpose computer system. The programs stored in the auxiliary storage device 13 are once loaded into the main storage device 12 and then executed by the CPU 14.

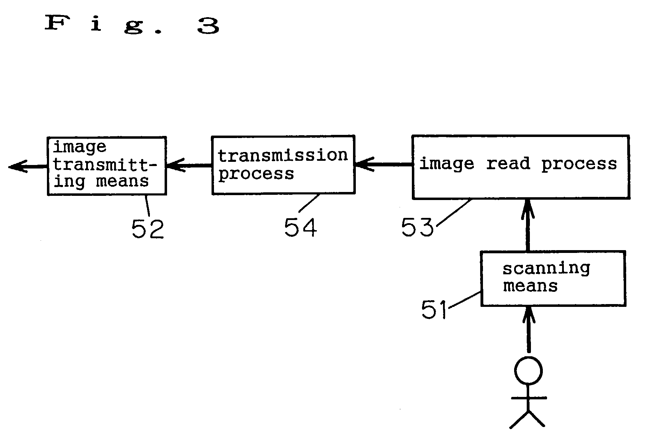

Next, the configuration of the above-mentioned transmitting device will be described with reference to Fig. 3.

Fig. 3 is a diagram of the system configuration of the transmitting device used in the embodiment.

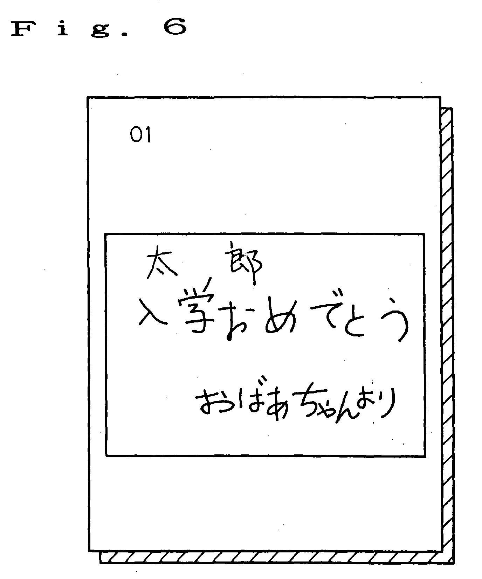

In Fig. 3, scanning means 51 is means for optically reading a sketch identifier for identifying a sketch, and an image such as a hand-written message which the sender intends to transmit, as image information, the sketch and the image being written in given portions of a predetermined sheet (see Fig. 6). Image transmitting means 52 is means for transmitting the image information read by the scanning means 51 to the image receiving means 41. An image read process 53 is means for reading the image information including the sketch identifier from the scanning means 51, and a transmission process 54 is means for transmitting the read image information from the image transmitting means 52.

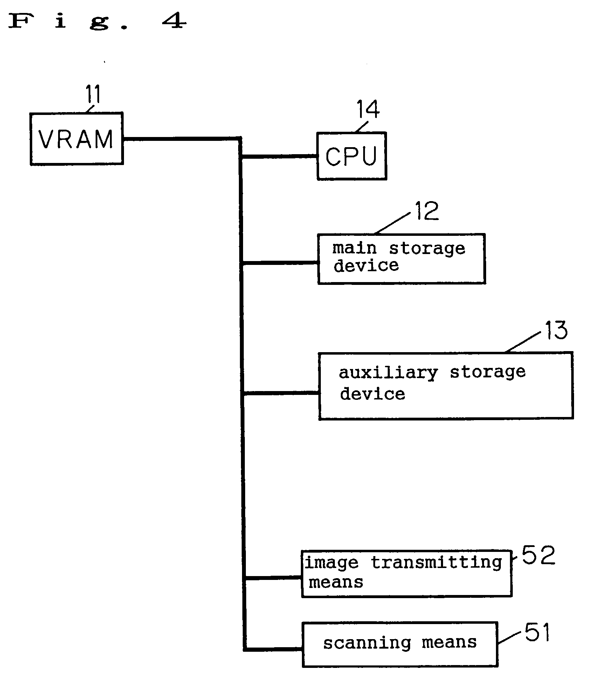

The hardware configuration in which the thus configured system is executed is shown in Fig. 4. Fig. 4 is fundamentally identical with the configuration of a general purpose computer system. The components are identical with those which have been described in the hardware configuration shown in Fig. 2 and those which have been described in the system configuration shown in Fig. 3. The identical components are denoted by the same reference numerals and their description is omitted.

The operation of the thus configured embodiment will be described, and at the same time also an embodiment of the transmission/reception method of the invention will be described.

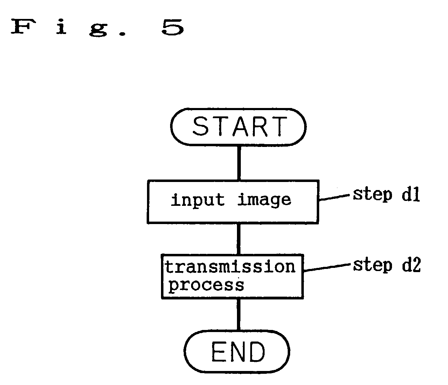

First, the operation of the transmitting device shown in Fig. 3 will be described with reference to a flowchart of Fig. 5.

Referring to Fig. 5, in step d1, an input of the image data including the sketch identifier from the user (sender) is received through the scanning means 51 is received in the image read process 53.

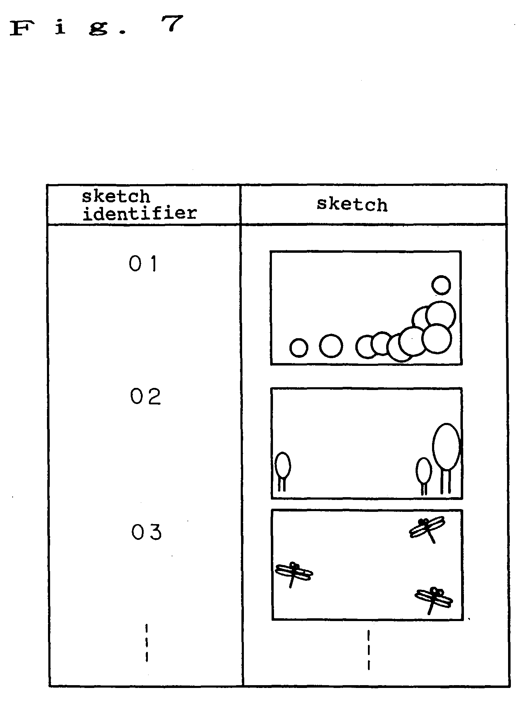

An example of the image data including the sketch identifier is shown in Fig. 6. Fig. 6 shows the predetermined sheet and is a view showing a state in which the sketch identifier for identifying a sketch, and a hand-written message which the sender intends to transmit are written in given portions of the sheet. As shown in the figure, numerals "01" written in the upper left portion of the sheet indicate the sketch identifier, and the portion enclosed by a rectangular frame in the center area of the sheet is a portion where an image data such as a hand-written message is to be written. The sketch identifier is indicated by numerals of 2 digits and previously correlated with an image data indicating a sketch. For example, the correlation between a sketch identifier and a sketch is previously established as shown in Fig. 7. Actually, the sketches of Fig. 7 are formed as image data. Such image data must be indicated in the form of very long numeral strings. In order to facilitate the understanding, the sketches are expressed in the form of pictures in Fig. 7. When each image data is actually output, a picture such as shown in Fig. 7 is displayed.

The sketch identifier may be a numeral or symbol strings of a larger digit number. Alternatively, a pattern data such as a bar code may be used as the sketch identifier. It is a matter of course that the sketch identifier may be realized by a method such as that using a mark sheet. Identifiers such as an identifier indicating a telephone number and the name of the sender or the degree of urgency of a message, and that indicating the contents of the message may be added to the portion of the sketch identifier so that the additional identifiers are used as information for classifying or organizing information. The sketch identifier may be handwritten on the sheet by the sender or previously printed on the sheet. In the case where a sketch identifier is previously printed, the sender is required only to select a sheet on which an identifier corresponding to a desired sketch is printed, from plural sheets on which different identifiers are respectively printed.

In the embodiment described above, information stored in the storing means of the invention is a sketch. The invention is not restricted to this. For example, a sound or voice data, a moving image data, or a combination of such a data and an image data may be used. Therefore, the process in the invention includes, for example, also a process of combining a message which is the main image with such data, i.e., sound and the like, and then reproducing the message.

Returning to Fig. 5, in step d2, the image data input in step d1 is transmitted in the transmission process 54 through the image transmitting means 52 to the image receiving means 41 which has been described in conjunction with Fig. 1. In the embodiment, the image transmitting means 52 transmits the data read in step d1 in the form of a facsimile signal. The conversion to a facsimile signal may be conducted by a method which is usually used in a conventional facsimile apparatus.

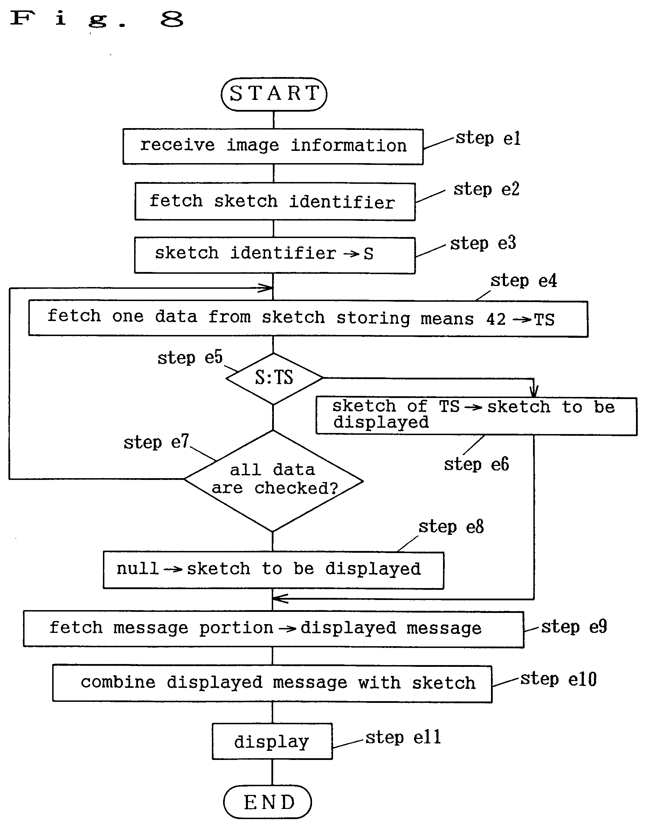

Next, the operation of the receiving device of the embodiment will be described with reference to a flowchart of Fig. 8.

Referring to Fig. 8, in steps e1 to e3, the image data including the sketch identifier is received through the image receiving means 41, the sketch identifier is fetched from the given portion, and the fetched sketch identifier is substituted into a variable S. The process of fetching the sketch identifier is executed by the sketch identifier fetch process 44. In the embodiment, the image receiving means 41 receives a facsimile signal sent through a telephone line and converts the signal into an image data. The method of this conversion may be a usual method which is conventionally used in a facsimile apparatus, a software having a facsimile reception function on a personal computer, or the like. In the embodiment, the operation of fetching the sketch identifier is implemented by fetching the numerals of 2 digits from the image information in the portion outside the frame in the upper portion of the image data. In this process, the numerals indicated in the form of an image data must be recognized. As the method of recognizing numerals given in the form of an image date, there are various kinds of methods including a method which has been used in the zip-code recognition process for mail. In the embodiment, any one of the conventional numeral recognition methods may be used. The sketch number which is obtained as a result of the recognition is substituted into the variable S.

In steps e4 to e8, data are sequentially fetched from the sketch storing means 42 in the sketch retrieval process 45, and a data having a sketch identifier which is equal to the sketch identifier substituted into the variable S is retrieved. Data in the form of a table such as shown in Fig. 7 are previously accumulated in the sketch storing means 42. Each time when step e4 is executed, a data is fetched in a sequence starting from the first one and then substituted into a variable TS. The value of an item of the sketch identifier in TS is compared with that of the variable S. If these values are equal to each other, the value of the item of the sketch in TS is stored as "sketch to be displayed." If the items of the sketch identifier of all data in the sketch storing means 42 fail to coincide with the variable S, the process proceeds to step e8 and "null" indicating that no data adequate as "sketch to be displayed" exists is substituted.

When the sketch identifier fetched in step e2 is 01 and this value is substituted into S, for example, the image data of the item of the sketch of the data in which the value of the item of the sketch identifier is 01 is retrieved from the sketch storing means 42 such as shown in Fig. 7, and then stored as the sketch to be displayed.

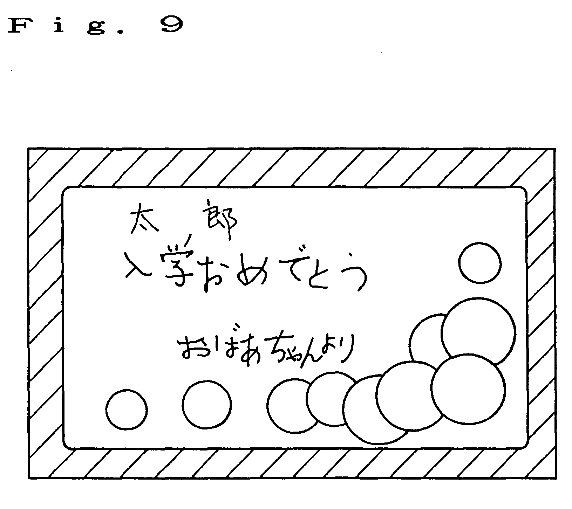

In steps e9 to e11, the sketch combination process 46 fetches an image data from the given portion received in step e1. The fetched data is displayed on the sketched displaying means 43 with being superimposed on the image data which has been stored in step e6 as "sketch to be displayed." In the embodiment, the given portion from which an image data is to be fetched is a portion in the rectangular frame in the image data. The method of detecting the rectangular frame in the image data may be implemented by a usual image processing technique. In the embodiment, any one of the conventional techniques may be employed in the method. When the sketch of the sketch identifier of 01 is retrieved from the sketch storing means 42 such as shown in Fig. 7 and the image data such as shown in Fig. 6 is received as the image information, for example, the portion in the frame of Fig. 6 is fetched and the display is conducted as shown in Fig. 9.

As described above, according to the embodiment, image information is received through the image receiving means, a sketch identifier is fetched from a given portion of the received image information, the sketch storing means is subjected to a retrieval operation on the basis of the sketch identifier, and the sketch which is obtained as a result of the retrieval and the given portion of the image information other than the sketch identifier are combinedly displayed on the sketched displaying means.

According to this configuration, the sender is enabled to easily transmit a message having an illustration, only by writing a message and designating a sketch identifier indicated by numerals or the like. When a sketch including a color or moving image of a fixed form is previously prepared and the sketch identifier for the sketch is designated, an information communication in which the color or moving image is used as a sketch can be conducted even in a monochrome facsimile apparatus which cannot handle such a color or moving image as a sketch in the prior art.

### (Embodiment 2)

A receiving device of an embodiment of the invention will be described.

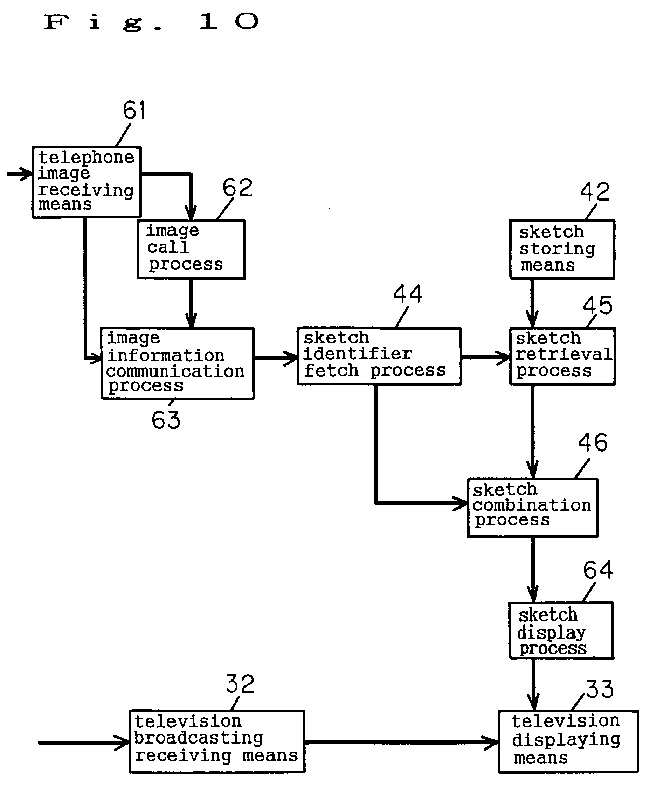

Fig. 10 is a diagram showing the system configuration of a television broadcasting receiving device which is an embodiment of the receiving device of the invention. The configuration of the embodiment will be described with reference to the figure.

The system configuration diagram of Fig. 10 includes components identical with the components which have been described in the system configuration of Embodiment 1 shown in Fig. 1. The identical components are denoted by the same reference numerals and their description is omitted.

In Fig. 10, 61 denotes telephone image receiving means which is connected to a telephone line and receives image information including a sketch identifier for identifying a sketch, in a given portion, and 62 denotes an image call process in which, when a line connection request is received through the telephone line connected to the telephone image receiving means 61, the device is connected to the telephone line. The reference numeral 63 denotes an image information reception process in which image information is received by the telephone image receiving means 61 through the connected line, and 64 denotes a sketched display process in which the image data including a sketch is displayed on television displaying means 33. The reference numeral 32 denotes television broadcasting receiving means for receiving a television broadcasting, and 33 denotes the television displaying means for displaying a television broadcasting, or a message data and a sketch.

The hardware configuration in which the thus configured system is executed is shown in Fig. 11. Fig. 11 is fundamentally identical with the configuration of a general purpose computer system. The components are identical with those which have been described in the hardware configuration shown in Fig. 2 and those which have been described in the system configuration shown in Fig. 10. The identical components are denoted by the same reference numerals and their description is omitted.

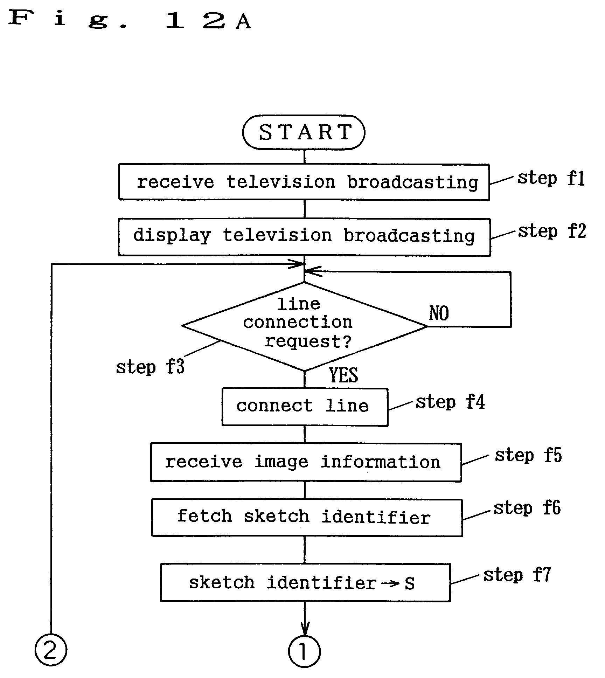

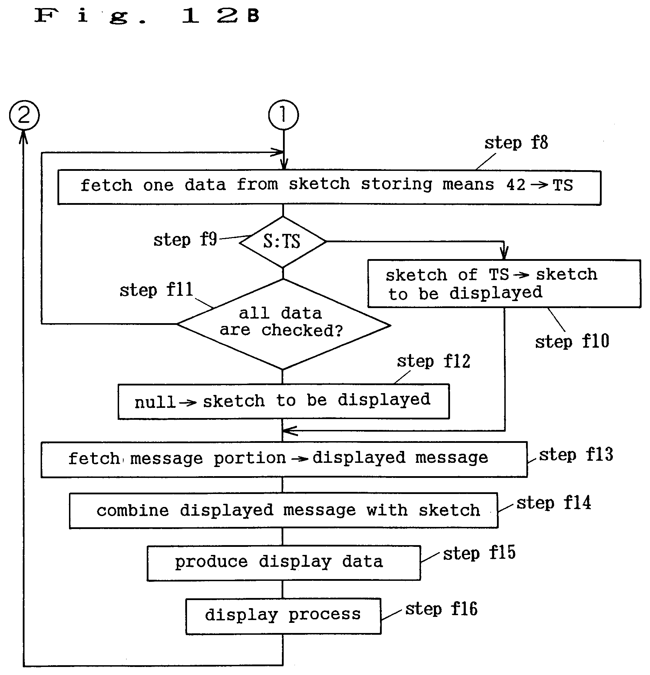

The operation of the thus configured television broadcasting receiving device will be described with reference to a flowchart of Fig. 12, and at the same time also an embodiment of the transmission/reception method of the invention will be described.

In steps f1 to f4, the same processes as those of steps c1 to c4 of an embodiment of a second invention are conducted.

Referring to the figure, in steps f1 and f2, the television broadcasting receiving means 32 receives a television broadcasting by a method which has been usually used, and the television broadcasting is displayed on the television displaying means 33.

In steps f3 and f4, it is judged whether the line connection request is received through the telephone line connected to the telephone image receiving means 61 or not. If the line connection request is not received, the detection of the line connection request is continued. If the line connection request is received from the image transmitting means 51, the line connection is conducted in the image call process 62. The method of connecting the line is conducted in accordance with a usual connecting process for a telephone line. Furthermore, image information consisting of the message data and the sketch identifier is received through the image information reception process 63. In the image information reception process 63, a facsimile signal is received as a data to be received and then converted into an image data. The method of this conversion may be a usual method which is conventionally used in a facsimile apparatus, a software having a facsimile reception function on a personal computer, or the like.

In steps f5 to f14, the same processes as those of steps e1 to e10 described in Embodiment 1 above are conducted. In the embodiment, however, the process conducted by the image receiving means 41 in Embodiment 1 is conducted by the telephone image receiving means 61.

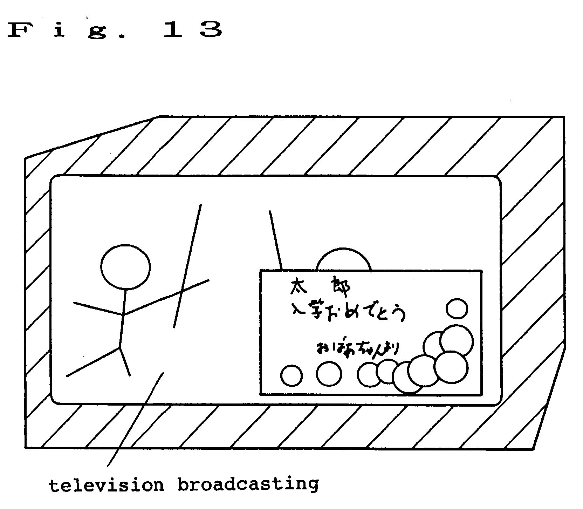

In steps f15 and f16, the sketched display process 64 displays the image data which is obtained as a result of the process in step f14, on the television displaying means 33 with being superimposed on a television program displayed on the television displaying means 33. As shown in Fig. 13, for example, the display is conducted on the television broadcasting.

As described above, according to the embodiment, the television broadcasting receiving means receives a television broadcasting, the received broadcasting is displayed on the television displaying means, the telephone line is connected when the line connection request is received through the line connected to the telephone image receiving means, image information is received by the telephone receiving means through the connected line, the sketch identifier is fetched from the given portion of the received image information, the sketch storing means is subjected to a retrieval operation on the basis of the sketch identifier, and the sketch which is obtained as a result of the retrieval and the given portion of the image information other than the sketch identifier are combinedly displayed on the television displaying means.

According to this configuration, in order to enable a message combined with a sketch to be received by a television receiving device, the sender is required only to write the message, designate a sketch identifier indicated by numerals or the like, and then conduct the transmission through a facsimile apparatus. As a result, usually, a television broadcasting is enjoyed, and, only when a message is received, it is possible to see the message combined with a sketch, with being superimposed on a television broadcasting. Consequently, the receiver is not requested to prepare an apparatus dedicated for reception or to conduct a special operation for reception.

### (Embodiment 3)

A receiving device of an embodiment of the invention will be described.

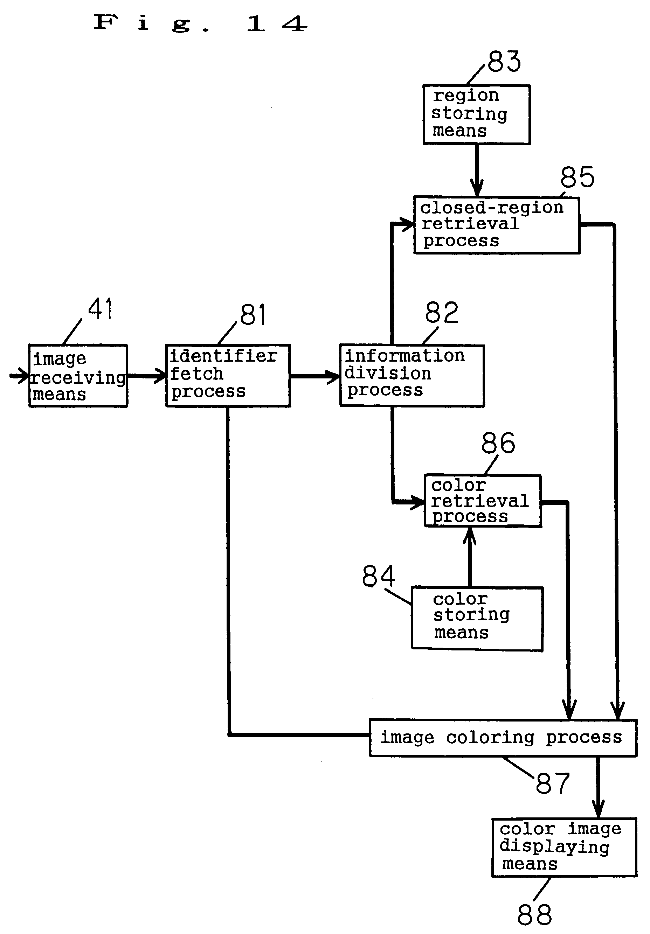

Fig. 14 is a diagram showing the system configuration of a receiving device which is an embodiment of the invention. The configuration of the embodiment will be described with reference to the figure.

In Fig. 14, image receiving means 41 serving as the receiving means of the invention is means for receiving image information transmitted from a transmitting device. The transmitting device reads an image including: a contour line of a picture written in a given portion of a predetermined sheet; a color identifier for designating a color to be put on a portion of the picture; a closed-region identifier for designating a colored region of the color; and a hand-written message which the sender intends to transmit, as image information and transmits the image. In the embodiment, the main image of the invention corresponds to the contour line of the picture and the hand-written message, and the display medium of the invention corresponds to the sheet. Furthermore, the process information of the invention corresponds to the color identifier and the closed-region identifier.

The reference numeral 81 denotes an identifier fetch process in which image information is received through the image receiving means 41 and the closed-region identifier and the color identifier are fetched from a given portion of the received image information, and 82 denotes an information division process in which the closed-region identifier and the color identifier that are fetched in the identifier fetch process 81 are divided from each other. The reference numeral 83 denotes region storing means for storing the closed-region identifier and a region in the image with being previously correlated with each other, and 84 denotes color storing means for storing the color identifier with being previously correlated. The reference numeral 85 denotes a closed-region retrieval process in which the region storing means 83 is subjected to a retrieval operation on the basis of the closed-region identifier, and 86 denotes a color retrieval process in which the color storing means 84 is subjected to a retrieval operation on the basis of the color identifier. The reference numeral 87 denotes an image coloring process in which the color retrieved in the color retrieval process is put on the closed region in the image retrieved in the closed-region retrieval process 85 and the colored region is displayed on color image displaying means 88.

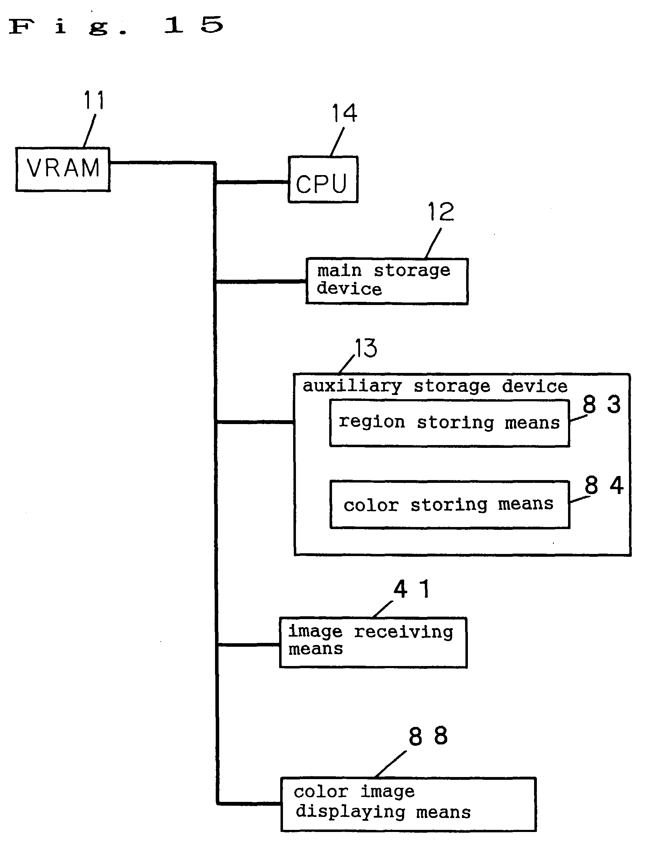

The hardware configuration in which the thus configured system is executed is shown in Fig. 15. Fig. 15 is fundamentally identical with the configuration of a general purpose computer system. The components are identical with those which have been described in the hardware configuration shown in Fig. 2 and those which have been described in the system configuration shown in Fig. 14. The identical components are denoted by the same reference numerals and their description is omitted.

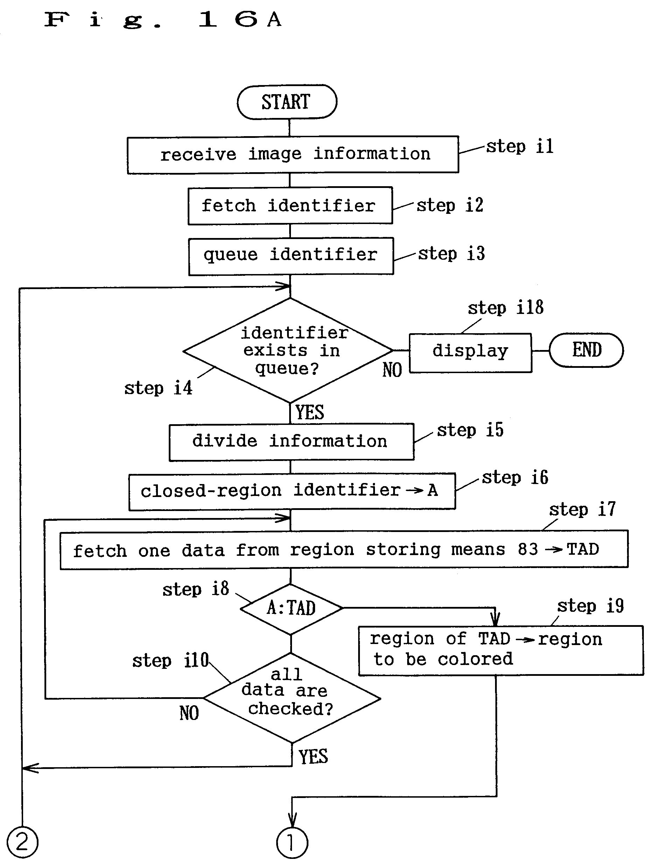

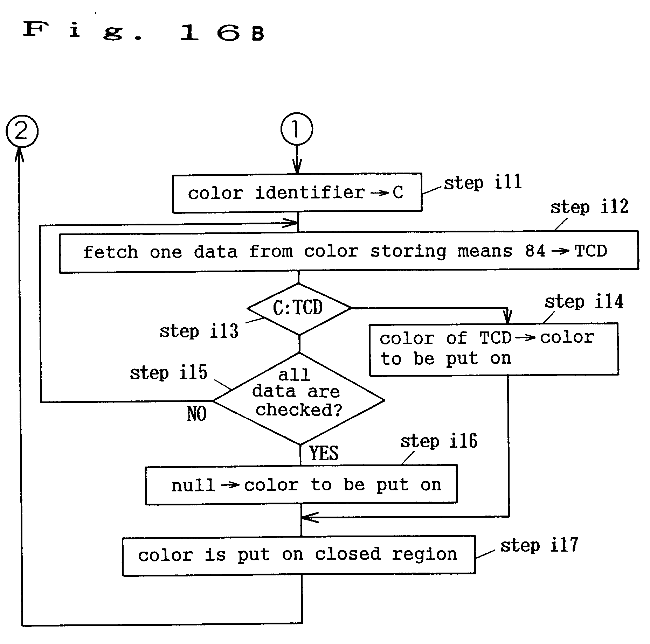

The operation of the thus configured receiving device will be described with reference to a flowchart of Fig. 16, and at the same time also an embodiment of the transmission/reception method of the invention will be described.

Referring to the figure, in steps i1 to i3, an image data including the closed-region identifier and the color identifier is received through the image receiving means 41, and information including the closed-region identifier and the color identifier is fetched from the given portion. The transmission of the image may be implemented by using a usual apparatus such as a facsimile apparatus.

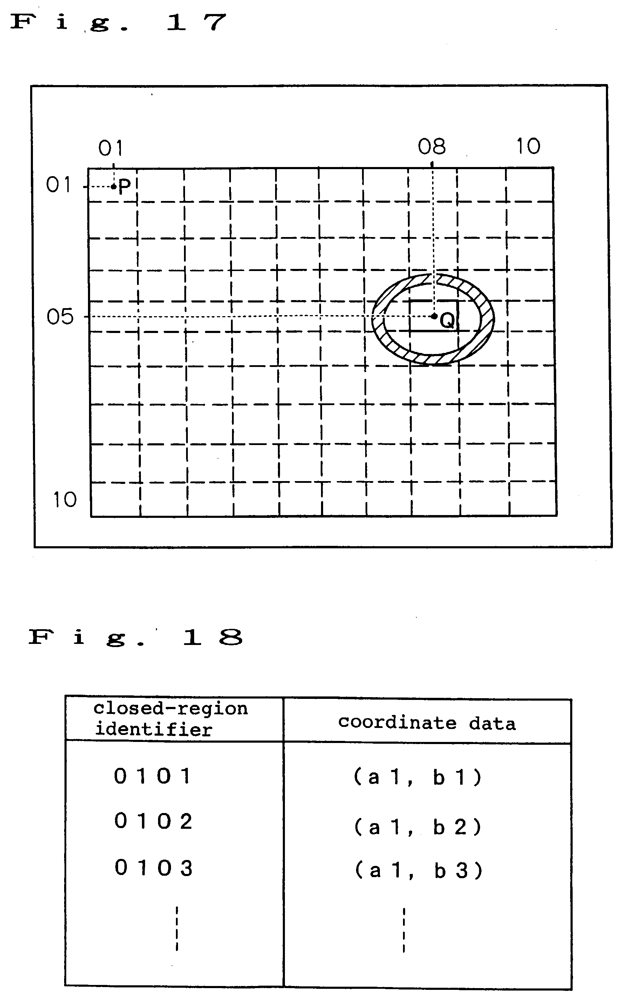

The manner of specifying the closed region of a pattern on the sheet in the transmission side will be described with reference to Fig. 17, etc. Fig. 17 shows a state where an elliptical pattern is previously printed on the sheet which is used in the transmitting device, and is a view illustrating the manner of deciding the closed-region identifier of the elliptical pattern.

In the embodiment, the portion in a rectangular frame at a substantially center area of the predetermined sheet which is used for reading image information in the transmitting device is partitioned into 10 regions in height and 10 regions in width or 100 rectangular regions in total. In the rectangular frame, a picture which is to be output from the receiving device with being colored is previously drawn, and a message may be handwritten. In the coordinate system in the frame, the position of a closed region is specified by the coordinate values of the center of the partitioned rectangular region existing within the closed region.

In the embodiment, with respect to the center of a rectangular region, the coordinate value in the width direction and that in the height direction are indicated by numerals of 2 digits from 01 to 10 as shown in Fig. 17, respectively. A closed-region identifier corresponding to the closed region is determined by using the coordinate values of the center of the rectangular region which are indicated as described above. In this case, it is assumed that the coordinate values of the center P of the rectangular region at the upper left corner of the frame shown in Fig. 17 is indicated by (coordinate value in the width direction, coordinate value in the height direction) = (01, 01), and that, as moving rightward, the coordinate value in the width direction has a larger value, and, as moving downward, that in the height direction has a larger value. Specifically, the coordinate values of the center Q of the rectangular region existing within the elliptical pattern drawn on the sheet shown in Fig. 17 are indicated by (08, 05), and the identifier of the closed region is indicated by 0805. In the embodiment, since 16 colors are used, the color identifier is indicated by numerals of 2 digits from 01 to 16. In Fig. 17, for the sake of convenience in description, the identifier is not shown in order to avoid confusion with indication of the coordinate values.

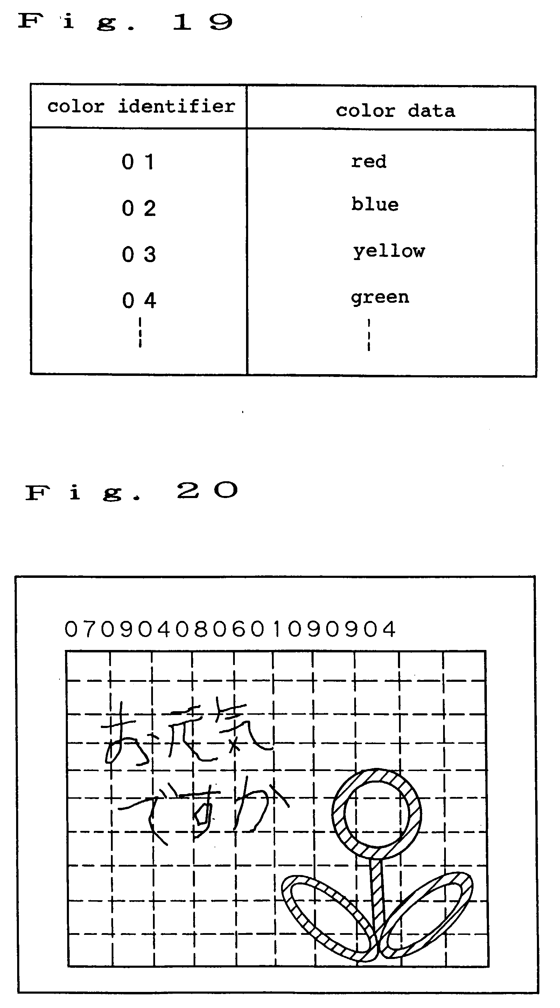

When the closed region indicated by the elliptical pattern such as shown in Fig. 17 is designated to yellow, for example, the identifier of the closed region is 0805 as described above and the color identifier indicating yellow is 03 (see Fig. 19), and hence numerals of 6 digits which are obtained by arranging the two identifiers or 080503 are used. The numerals of 6 digits are indicated in the vicinity of the upper side of the frame and outside the frame, as the process information (the number is not shown in the figure).

In the embodiment, when the closed-region identifier and the color identifier are to be indicated, numerals of 6 digits are disposed above the image and outside the frame so that the two identifiers are indicated as one set. The invention is not restricted to this. For example, a numeral or character string of a higher number of digits may be used in order to partition the rectangle into a larger number of rectangular regions or use a larger number of colors. When each of the rectangular regions are further partitioned, it is not always necessary to use the coordinate values of the center of a rectangular region as described above. In the embodiment, the center of a rectangular region is used in view of the case where a predetermined rectangular region fails to be completely included within a closed region. Furthermore, this is based on the premise that the center of any one of the rectangular regions always exists within the closed region. By contrast, when the frame is partitioned into rectangular regions which are sufficiently smaller in size as compared with the closed region, any one of the rectangular regions is always completely included within the closed region, and hence the indication is not restricted to use the center as far as the rectangular region can be specified. To the portion of the identifiers, other identifiers such as an identifier indicating a telephone number and the name of the sender or the degree of urgency of a message, that indicating the kansei, and that indicating the contents of the message may be added so that the additional identifiers are used as information for classifying or organizing information. The term of kansei will be described in detail in an embodiment described below.

Returning to Fig. 16, the operation will be further described.

In the process of step i2, the numerals of the process information which are indicated in the form of an image data as described above must be recognized. As the method of recognizing numerals given in the form of an image date, there are various kinds of methods including a method which has been used in the zip-code recognition process for mail and the like. In the embodiment, any one of the conventional numeral recognition methods may be used. It is a matter of course that a method in which the numerals are indicated by a bar code or a mark may be used.

In step i3, each set of the closed-region identifier and the color identifier fetched in step i2 is queued. In the embodiment, one set is configured by numerals of 6 digits. When the numeral string fetched in step i3 is "080503100905," therefore, "080503" and "100905" are queued in this sequence.

In step i4, it is judged whether there are identifiers in the queue or not. If there are identifiers in the queue, the process proceeds to step i5. If NO, the process proceeds to step i19.

In step i5, one set of identifiers is fetched from the queue, and then divided into the closed-region identifier and the color identifier. In the embodiment, the former 4 digits are fetched as the closed-region identifier and the following 2 digits as the color identifier.

In steps i6 to i11, the closed-region identifier among the divided identifiers is substituted into a variable A, and, in the closed-region retrieval process 85, data are sequentially fetched from the region storing means 83 and a data having a closed-region identifier which is equal to the closed-region identifier substituted into the variable A is retrieved. Data in the form of a table such as shown in Fig. 18 are previously accumulated in the region storing means 83. For example, (a1, b1) shown in Fig. 18 indicates the coordinate values of a received image, and corresponds to the dot which is a1-th from the left and b1-th from the top in the image display region in the reception side. The dots in the reception side correspond to the centers of the 100 rectangular regions in the rectangular frame on the sheet in the transmission side, respectively. The coordinate system for the centers of the rectangular regions shown in Fig. 17, and that for the coordinate data shown in Fig. 18 correspond to each other so that the transmitted image is correctly reproduced on the display device in the reception side.

Each time when step i8 is executed, a data is fetched from the region storing means in a sequence starting from the first one and then substituted into a variable TAD, and the value of an item of the region identifier in TAD is compared with that of the variable A. If these values are equal to each other, the value of an item of the coordinate data in TAD (for example, (a1, b1)) is stored as a point within the closed region. On the basis of the transmitted closed-region identifier, therefore, the position of the corresponding closed region can be specified by using the coordinate values. If the items of the closed-region identifier of all data in the region storing means 83 fail to coincide with the variable A, the process proceeds to step i4.

In steps i12 to i16, the color identifier among the divided identifiers is substituted into a variable C, and, in the color retrieval process 86, data are sequentially fetched from the color storing means 84 and a data having a color identifier which is equal to the color identifier substituted into the variable C is retrieved. Data in the form of a table such as shown in Fig. 19 are previously accumulated in the color storing means. Each time when step i12 is executed, a data is fetched in a sequence starting from the first one and then substituted into a variable TCD, and the value of an item of the color identifier in TCD is compared with that of the variable C. If these values are equal to each other, the value of an item of the color data in TCD is stored as the color of the closed region. If the items of the color identifier of all data in the color storing means 84 fail to coincide with the variable C, null indicating that no color is designated is stored as the color of the closed region. If the color of the closed region is null, the coloring process is not conducted on the closed region.

In step i17, for the received image data, the closed region stored in step i9 is colored in the color stored in step i14 in the image coloring process 87. Thereafter, the process proceeds to step i4. In the method of coloring the closed region, it is possible to use a general purpose library function or algorithm in which an arbitrary point in a closed region and the color of the boundary are designated and the closed region is filled with the color, such as floodfill function included in the graphic library of C. When the color in the closed region is changed at constant time intervals, it is possible also to reproduce blinking colors.

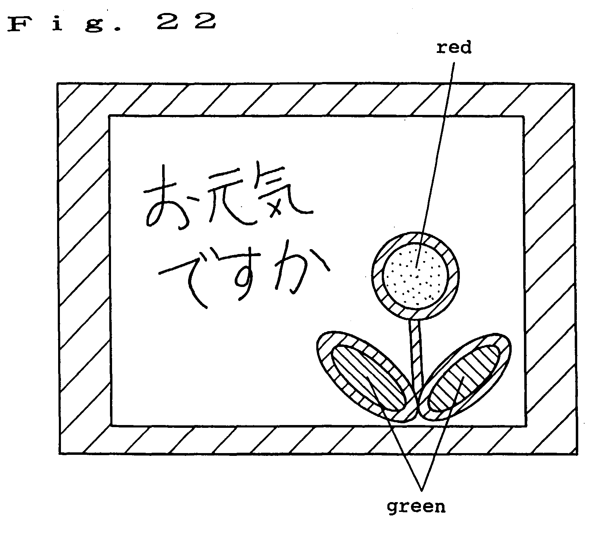

In step i18, a given portion is cut out from the colored image data and then displayed on the color image displaying means 88. In the embodiment, the given portion which is to be cut out from the image data so as to be displayed is indicated by the rectangular frame in the image data. The method of detecting the rectangular frame from the image data may be implemented by a usual image processing technique. In the embodiment, any one of the conventional techniques may be employed in the method. When the received image data is that shown in Fig. 20, for example, the image is displayed as shown in Fig. 22. Fig. 20 is a view showing an example of the received image in which the coloring process has not yet been conducted on the main image. In the above, the case where a rectangular frame has position information for the cut out operation, the rectangular frame is detected, and then the cut out operation is conducted has been described. The invention is not restricted to this. In order to detect the position of a numeral string, a mark, or the like indicative of the process information, for example, a configuration which uses a timing mark previously printed on a sheet and functioning as an auxiliary mark may be employed. In this case, the position of the timing mark is detected, and an image data existing a position which has a predetermined relative positional relationship with respect to the detected position is cut out. In the case where a timing mark is used, therefore, the rectangular frame is printed as a mere reference for the effective region where the user handwrites characters.

In the case of the picture of a flower shown in Fig. 20, the closed regions of the flower picture on the sheet used in the transmission side may be previously colored or may be colored in colors desired by the user. In the case where the regions are previously colored, the user is required only to select a sheet on which the picture is colored in a desired manner, from plural sheets on which coloring is conducted in different manners. In this case, the color identifier and the region identifier are previously printed on the sheets. In the case where the regions are to be colored in colors desired by the user, the user must write the color identifier and the region identifier.

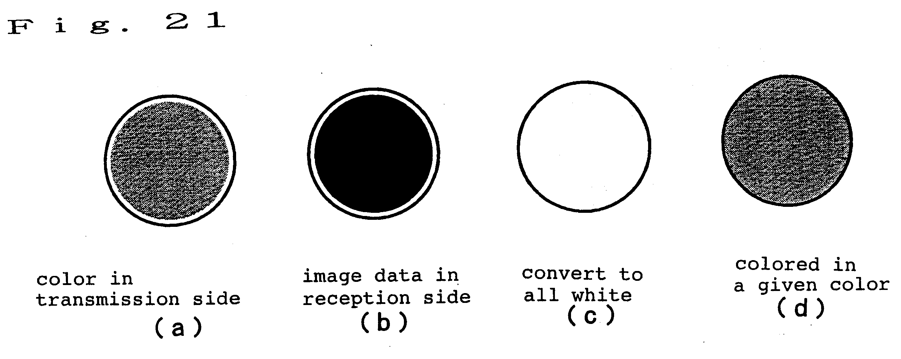

The process of correctly reproducing a colored picture in the reception side will be described more specifically with reference to Figs. 21(a) to 21(d).

In a usual case, when a picture in which closed regions are colored is read in a facsimile apparatus in the reception side, the picture may be sometimes read as black depending on the kind of the color used in the coloring. When such a situation occurs, in the side of the receiving device, black is output as the ground color in the closed region. When no countermeasure is taken, the designated color cannot be correctly reproduced. Hereinafter, a method which can solve this problem and make the reception side to correctly reproduce a color will be described.

First, as a precondition, it is assumed that the following restriction is imposed on the method of coloring a sheet which is to be used in the transmission side.

Namely, in order to correctly reproduce a contour line for defining a closed region on a sheet (hereinafter, such a line is referred to as merely a contour line) in the reception side, a picture which is colored with previously interposing a predetermined margin between a contour line and the colored region inside the line is used in the transmission side. Fig. 21(a) shows a circle in which a margin of a given width is previously formed inside and adjacent to a contour line and the portion within the margin is colored in a predetermined color.

When the picture which is colored as described above is transmitted from a facsimile apparatus, the received data indicative of the density of white or black in each closed region in the reception side becomes a data indicative of a state where all dots are in white or black, or state where white dots and black dots mixedly exist, in accordance with the density of the coloring in the transmission side.

When a data in which white dots and black dots mixedly exist in a closed region is received, a filtering process is conducted so that all dots are converted into black. This filtering process may be conducted by using a noise reduction technique or the like which is usually employed in a monochrome image process.

Except a closed region which is received in a state where the whole interior of the closed region is in white, when the filtering process or the like is adequately conducted, a data indicative of the contour line, that indicative of the margin inside the line, and that indicative of the portion where is further inner side and the whole is in black are stored as a data of each closed region in a predetermined memory as shown in Fig. 21(b). Fig. 21(b) is a diagram of a data of each closed region stored in the memory in the reception side.

Next, the process of the image data shown in Fig. 21(b) will be described. The all-black region at the center of the image data shown in the figure is converted into the all-white region as shown in Fig. 21(c) by using a known scan line seed algorithm or the like. The scan line seed algorithm is a technique in which a point in a conversion region and the color of a border line are designated, and the interior of the conversion region is filled in a predetermined color in the range starting from the designated internal point and reaching the border line. Unlike the above-described contour line, the term of border line used in the technique means a line indicating the border between the margin portion shown in Fig. 21(b) and the black region inner than the margin portion. In the image data which has been subjected to the image process by using the algorithm, therefore, a data indicative of the margin is eliminated, and there exist only a data indicative of the contour line, and that indicating that the portion inside the line is colored in all white. Even when a data in which all dots are black or white dots and black dots mixedly exist is received as a data indicative of the density of white or black in a closed region in the reception side, therefore, the data can be converted into a data indicating that the whole interior is colored in white, except the contour line of the closed region, and hence the above-discussed problem is not produced.

In this way, each closed region is colored in a designated color and the coloring process is completed by the coloring method based on the scan line seed algorithm in which a portion inside the closed region and reaching the contour line are colored by using a converted image data (see Fig. 21(d)). The series of above-described processes relating to the coloring are conducted as the preprocessing for step i17 of Fig. 16. In the above, the case where, when a data in which white dots and black dots mixedly exist in a closed region is received, a filtering process of converting all dots into black is conducted has been described. The invention is not restricted to this. For example, a filtering process of converting all dots into white may be conducted. Alternatively, in accordance with the ratios of white and black dots, all dots may be converted into the color having a higher ratio.

As a result of conducing the above-described method, irrespective of the color of the picture in the transmission side, also the contour line can be reproduced and the coloring can be correctly conducted in the reception side.

In the case where the regions are colored in colors desired by the user, when a color pencil or the like is used in the coloring, unevenness in black and white may be sometimes produced in the color in a closed region in the reception side. Also when such a situation occurs, the above-described filtering process may be conducted so that a data in a blurred portion is eliminated.

In the above, the method based on the premise that, when a picture used in the transmission side is colored, a margin portion is always disposed has been described. The invention is not restricted to this. For example, the coloring may be conducted without forming the margin portion. In this case, the reception side cannot recognize the contour line, and hence also the portion for the contour line is colored, so that the contour line is not reproduced. Even in this case, when the portions inside and outside the contour line are to be colored in different colors, the closed regions can be distinguished from each other based on the difference in color, and hence the picture in the transmission side can be approximately reproduced. Furthermore, there are the following methods in which the coloring can be conducted without forming the margin portion and the contour line can be reproduced. In the first method, the process in the reception side is conducted so that the region ranging from the contour line of the colored region to a portion which is inner than the contour line by a predetermined number of dots is colored in black, with the result that the contour line of a constant width can be reproduced. In the second method which is a method of faithfully reproducing even the relative thickness of the contour line, also information of the thickness of the contour line is added as process information to a sheet in the transmission side, so as to correspond to the closed region. According to this method, the process information is read in the reception side and the contour line can be reproduced more faithfully on the basis of the information of the thickness of the contour line.

As described above, the embodiment is characterized in that the device comprises: image receiving means for receiving image information having in a given portion a closed-region identifier for designating a closed region of an image, and a color identifier for designating a color in the closed region; region storing means for correlating a point in the closed region with the closed-region identifier; color storing means for correlating a color with the color identifier; and colored-image displaying means for displaying a colored image, image information is received through the image receiving means, the region identifier and the color identifier are fetched from the given portion of the received image information, the region storing means is subjected to a retrieval operation on the basis of the closed-region identifier, a color which is obtained by subjecting the color storing means to a retrieval operation on the basis of the color identifier is put on the closed region including coordinates obtained as a result of the retrieval operation, a given portion other than the closed-region identifier and the color identifier is cut out, and the cut out portion is displayed on the colored-image displaying means.

According to this configuration, when the sender designates the closed-region identifier and the color identifier which are indicated by numerals or the like, the designated color can be freely put on the closed region in the image. Therefore, an original colorful message can be easily received from even a conventional monochrome facsimile apparatus. When a blinking color in which colors are alternatingly changed is set, it is possible to easily receive a message which is provided with movement such as blinking of decorative illumination of a Christmas tree.

### (Embodiment 4)

A receiving device of an embodiment of the invention will be described.

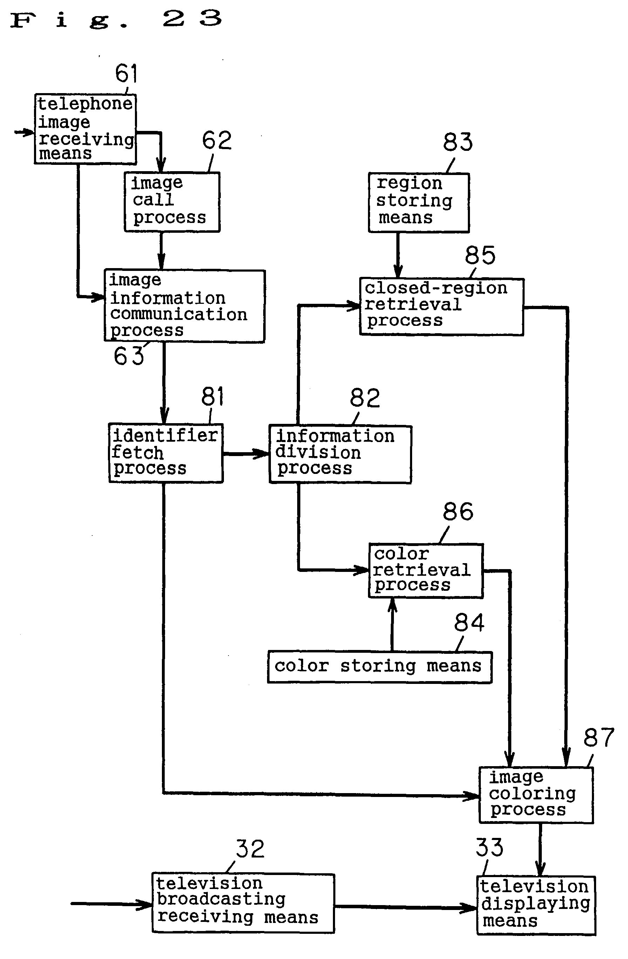

Fig. 23 is a diagram showing the system configuration of a television broadcasting receiving device which is an embodiment of the receiving device of the invention. The configuration of the embodiment will be described with reference to the figure.

Fig. 23 includes components identical with those which have been described in the system configuration of Embodiment 2 (see Fig. 10) and the system configuration of Embodiment 3 (see Fig. 23). Therefore, the components are denoted by the same reference numerals and their description is omitted.

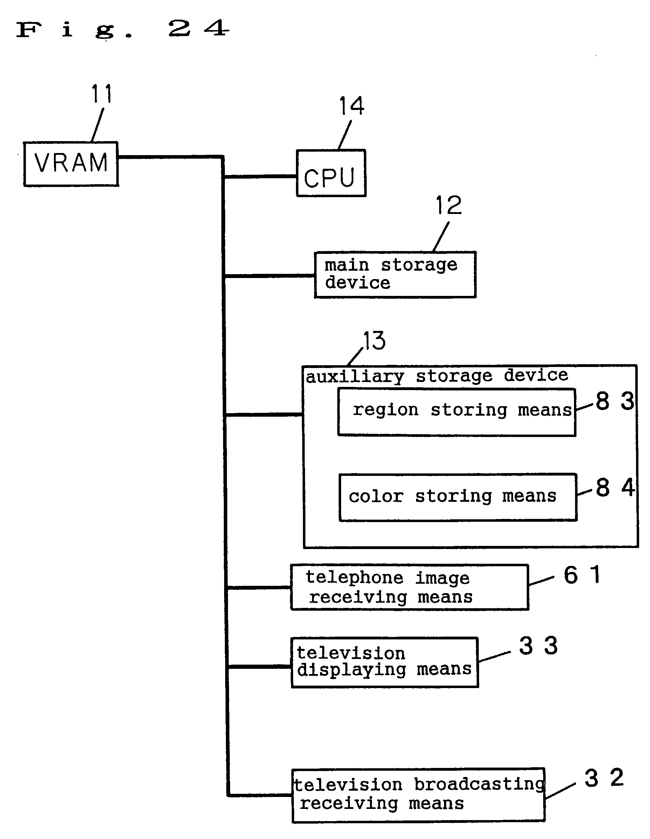

The hardware configuration in which the thus configured system is executed is shown in Fig. 24. Fig. 24 is fundamentally identical with the configuration of a general purpose computer system. The components are identical with those which have been described in the hardware configuration of the television broadcasting receiving device shown in Fig. 11, and those which have been described in the system configuration shown in Fig. 14. The identical components are denoted by the same reference numerals and their description is omitted.

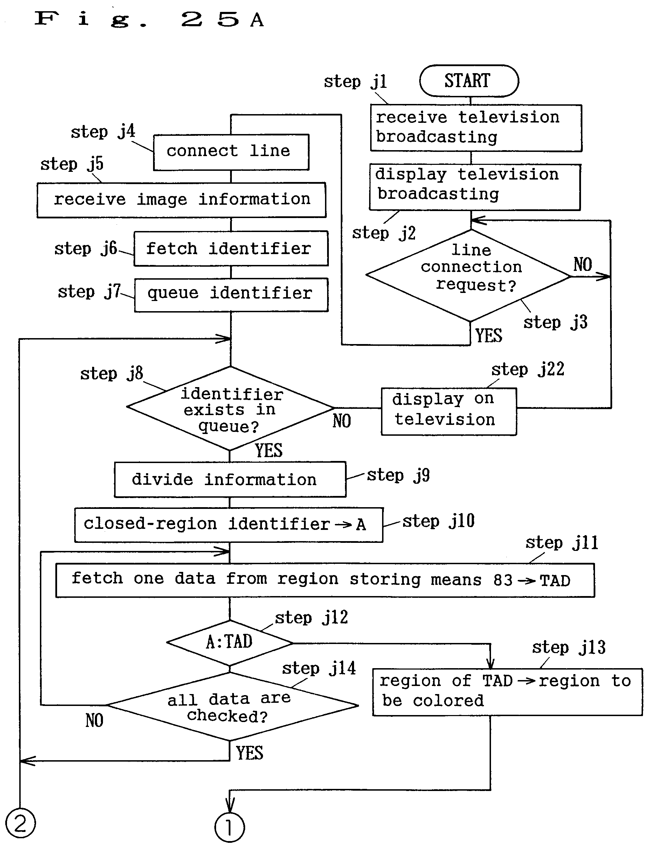

The operation of the thus configured television broadcasting receiving device will be described with reference to a flowchart of Fig. 25, and at the same time also an embodiment of the transmission/reception method of the invention will be described.

In steps j1 to j4, the same processes as those of steps f1 to f4 of Fig. 12 of Embodiment 2 described above are conducted.

In steps j5 to j21, the same processes as those of steps i1 to i17 of Fig. 16 of Embodiment 3 described above are conducted. In the embodiment, however, the process which is conducted by the image receiving means 41 in Embodiment 3 is conducted by the telephone image receiving means 61.

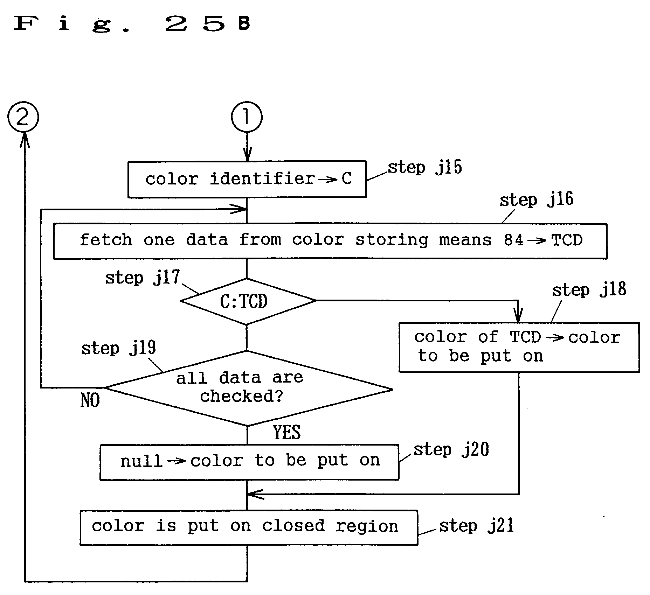

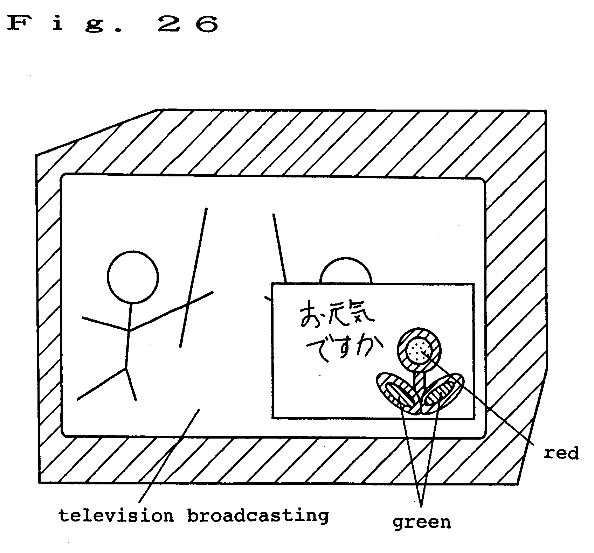

In step j22, a given portion is cut out from the image data which has been colored in step j21, and displayed on the television displaying means 33 with being superimposed on a television program displayed on the television displaying means 33. As shown in Fig. 26, for example, the display is conducted so as to be superimposed on the screen of the television broadcasting. Fig. 26 is a view showing the state where image information transmitted from the transmitting device is reproduced as described above and displayed on the television displaying means 33 with being superimposed on a screen of a television broadcasting.

As described above, the embodiment is characterized in that the device comprises: telephone image receiving means, connected to a telephone line, for receiving image information having in a given portion a closed-region identifier for designating a closed region of an image, and a color identifier for designating a color in the closed region; television broadcasting receiving means for receiving a television broadcasting; region storing means for storing a point in the closed region with being previously correlated with the closed-region identifier; color storing means for storing a color with being previously correlated with the color identifier; and television displaying means for displaying a television broadcasting or a color image, a television broadcasting is received by the television broadcasting receiving means, the received broadcasting is displayed on the television displaying means, the line is connected when a line connection request is received through the telephone line connected to the telephone image receiving means, image information is received by the telephone image receiving means through the connected line, the region identifier and the color identifier are fetched from the given portion of the received image information, the region storing means is subjected to a retrieval operation on the basis of the closed-region identifier, a color which is obtained by subjecting the color storing means to a retrieval operation on the basis of the color identifier is put on the closed region including coordinates obtained as a result of the retrieval operation, a given portion other than the closed-region identifier and the color identifier is cut out, and the cut out portion is displayed on the television displaying means.

According to this configuration, an original colorful message produced by the sender can be received by the television receiving device. As a result, usually, a television broadcasting is enjoyed, and, only when a message is received, it is possible to see the original colorful message with being superimposed on the television broadcasting. Consequently, the receiver is not requested to prepare an apparatus dedicated for reception or to conduct a special operation for reception.

### (Embodiment 5)

A receiving device of an embodiment of the invention will be described.

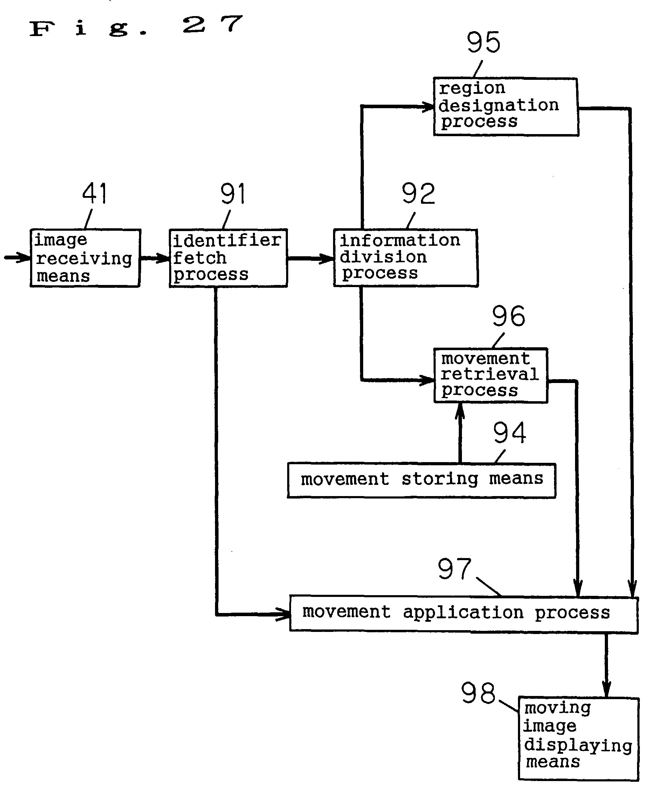

Fig. 27 is a diagram showing the system configuration of a receiving device which is an embodiment of the invention. The configuration of the embodiment will be described with reference to the figure.

In the figure, image receiving means 41 serving as the receiving means of the invention is means for receiving image information transmitted from a transmitting device. The transmitting device reads an image including a contour line of a picture written in a given portion of a predetermined sheet, a movement identifier for designating a movement to be applied to the picture, and a region identifier for designating a region to which the movement is to be applied, as image information, and transmits the image. In the embodiment, the main image of the invention corresponds to the contour line of the picture, and the display medium of the invention corresponds to the sheet. Furthermore, the process information of the invention corresponds to the movement identifier and the region identifier.

The reference numeral 91 denotes an identifier fetch process in which image information is received through the image receiving means 41 and the region identifier and the movement identifier are fetched from a given portion of the received image information, and 92 denotes an information division process in which the region identifier and the movement identifier that are fetched in the identifier fetch process 91 are divided from each other. The reference numeral 94 denotes movement storing means for storing the movement identifier and the movement of an image in the region with being previously correlated with each other, 95 denotes a region designation process in which a region in the image is designated on the basis of the region identifier, and 96 denotes a movement retrieval process in which the movement storing means 94 is subjected to a retrieval operation on the basis of the movement identifier. The reference numeral 97 denotes a movement application process in which the movement retrieved in the movement retrieval process is applied to the image in the region in the image retrieved in the region retrieval process 95, and then the image is displayed on moving image displaying means 98.

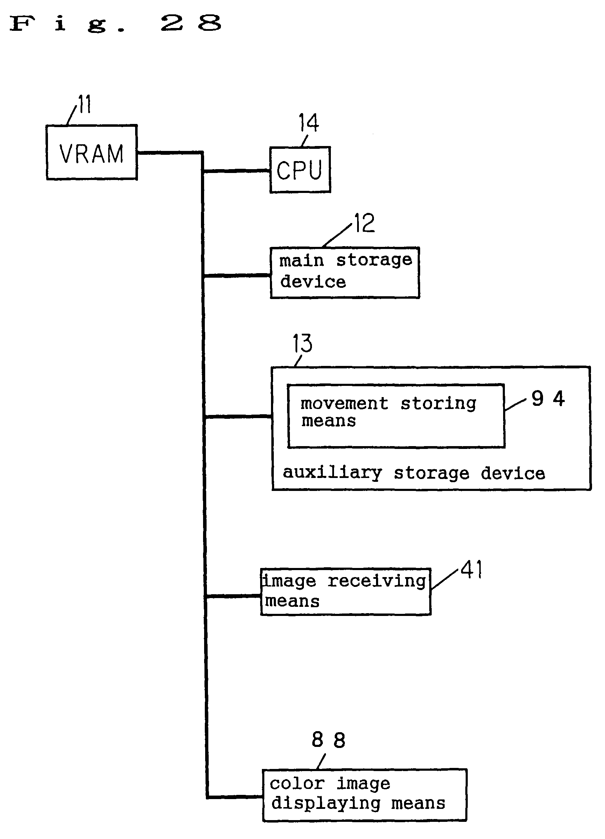

The hardware configuration in which the thus configured system is executed is shown in Fig. 28. Fig. 28 is fundamentally identical with the configuration of a general purpose computer system. The components are identical with those which have been described in the hardware configuration shown in Fig. 15 and those which have been described in the system configuration shown in Fig. 27. The identical components are denoted by the same reference numerals and their description is omitted.

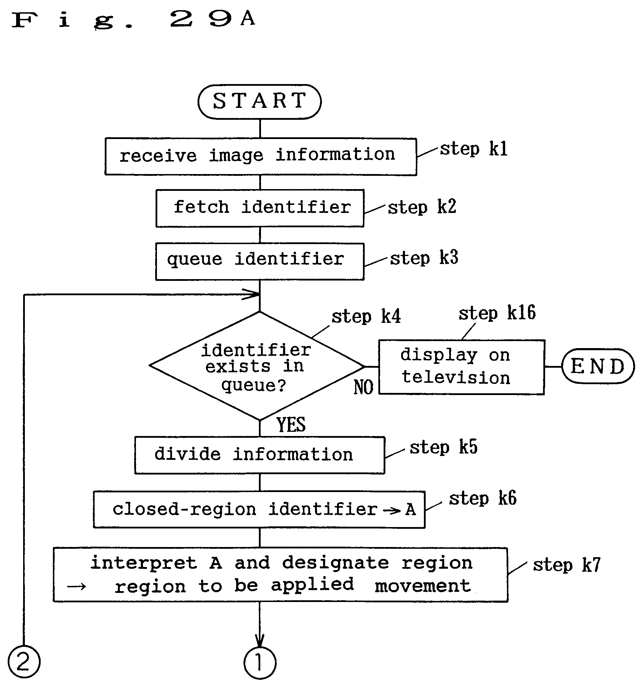

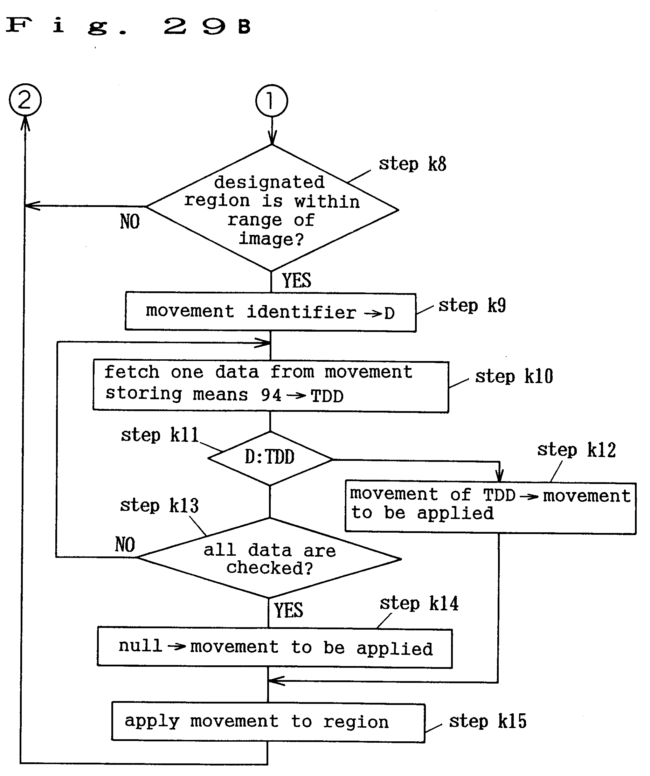

The operation of the thus configured receiving device will be described with reference to a flowchart of Fig. 29, and at the same time also an embodiment of the transmission/reception method of the invention will be described.

Referring to the figure, in steps k1 to k2, an image data including the region identifier and the movement identifier is received through the image receiving means 41, and information including the region identifier and the movement identifier is fetched from the given portion.

The transmission of the image may be implemented by using the methods and the devices described in the above embodiments, or by using a usual apparatus such as a facsimile apparatus.

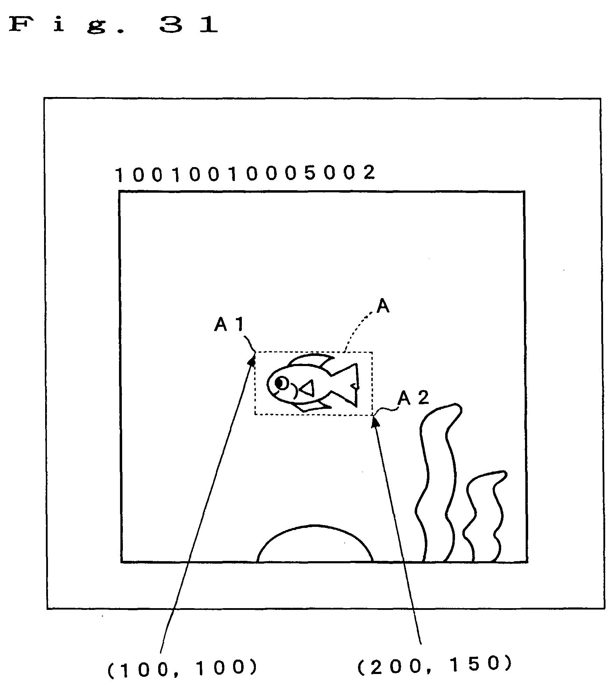

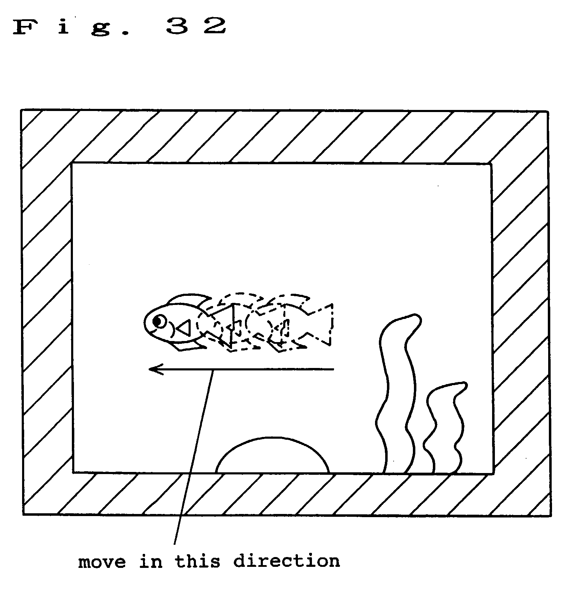

The manner of specifying the region of a pattern to which a movement is to be applied will be described with reference to Fig. 31, etc. Fig. 31 shows a state where pictures of a fish and seaweeds are previously printed on a sheet which is used in the transmitting device, and is a view illustrating the manner of deciding the region identifier of the picture of a fish.

Referring to Fig. 31, in the embodiment, the upper left corner of a rectangular frame at a substantially center area of the predetermined sheet which is used for reading image information in the transmitting device is set as the original, the width direction of the frame is set as the X-axis, and the height direction is set as the Y-axis. The portion in the rectangular frame is partitioned into 640 regions in the X-axis direction and 480 regions in the Y-axis direction. Therefore, the X and Y coordinates of a point in the frame can be indicated by numerals of 3 digits, respectively.

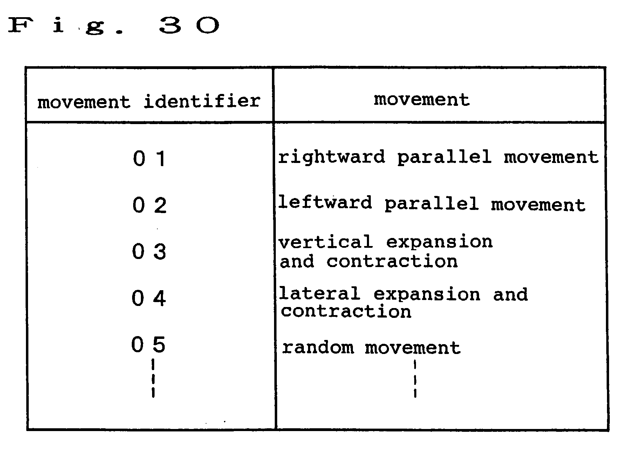

Specifically, as shown in Fig. 31, the region of the picture of a fish drawn on the sheet is specified by a rectangular region A indicated by a dotted line enclosing the picture of a fish. Namely, the coordinate values of a point A1 at the upper left corner of the dotted-line region A, and those of a point A2 at the lower right corner are A1(100, 100) and A2(200, 150), respectively. Therefore, the region of the dotted-line region A is indicated by a numeral string of 12 digits in total in which the coordinate values of the point A1, the width of the dotted-line region A, and the height of the region are indicated by numerals of 3 digits, respectively. The width of the dotted-line region A is indicated by a difference between the X coordinate values of the points A1 and A2. In the embodiment, therefore, the width is 200 - 100 = 100. The height of the dotted-line region A is indicated by a difference between the Y coordinate values of the two points. In the embodiment, therefore, the height is 150 - 100 = 50. The value of 50 is displayed as 050. Consequently, the region identifier of the dotted-line region A can be indicated as 100100100050. The movement identifier is indicated by numerals of 2 digits and previously correlated with a control program which applies a movement to an image. For example, the movement identifier is correlated as shown in Fig. 30. When the sender desires a movement in which the picture of a fish is moved in parallel in the leftward direction, 02 is selected as the movement identifier. The movement identifier is written on the right side of the region identifier so as to be continuous therefrom. The numerals of 14 digits which are determined in this way are displayed as the process information in the vicinity of the upper side of the frame and outside the frame (see Fig. 31). Actually, the dotted-line frame indicating the dotted-line region A is not drawn on the sheet.

Returning to Fig. 29, the operation will be further described.

In the process of step k2, the numerals of the process information which are indicated in the form of an image data as described above must be recognized. As the method of recognizing numerals given in the form of an image date, there are various kinds of methods including a method which has been used in the zip-code recognition process for mail and the like. In the embodiment, any one of the conventional number recognition methods may be used. It is a matter of course that a method in which the numerals are indicated by a bar code or a mark may be used.

In step k3, each set of the region identifier and the movement identifier fetched in step k2 is queued. In the embodiment, one set is configured by numerals of 14 digits. When the numeral string fetched in step k2 is "1001001000500220020010005003," therefore, "10010010005002" of the former half and "20020010005003" of the latter half are queued in this sequence.

In step k4, it is judged whether there are identifiers in the queue or not. If there are identifiers in the queue, the process proceeds to step k5. If NO, the process proceeds to step k16.

In step k5, one set of identifiers is fetched from the queue, and then divided into the region identifier and the movement identifier. In the embodiment, the numerals of former 12 digits are fetched as the region identifier and the numerals of following 2 digits as the movement identifier.

In steps k6 to k8, the region identifier among the divided identifiers is substituted into a variable A, and, in the region designation process 95, a series of sets of three digits in the sequence starting from the beginning are respectively interpreted as the X coordinate, the Y coordinate, the width of the region, and the height of the region, and the corresponding region in the image is stored as the designated region. When the designated region is not within the region of the received image, the error process is conducted and the process then proceeds to step k4.

Specifically, when the picture shown in Fig. 30 is sent as image information, the resolution of the received image is set to be 640 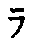 480 dots in the same manner as the above-described manner of deciding the identifiers in the transmission side. In this case, in order that the transmitted image is correctly reproduced on the display device in the reception side, the coordinate systems which correspond to each other are used. From the 14-digit identifier "10010010005002" of the former half, therefore, the X coordinate of the received image is interpreted as 100, the Y coordinate as 100, the width of the region as 100, and the height of the region as 50. The corresponding region of the image in the coordinate system in the reception side is stored as the designated region.

In steps k9 to k14, the movement identifier among the divided identifiers is substituted into a variable D, and, in the movement retrieval process 96, data are sequentially fetched from the movement storing means 94 and a data having a movement identifier which is equal to the movement identifier substituted into the variable D is retrieved. Data in the form of a table such as shown in Fig. 30 are previously accumulated in the movement storing means. Each time when step k9 is executed, a data is fetched in a sequence starting from the first one and then substituted into a variable TDD, and the value of an item of the movement identifier in TDD is compared with that of the variable D. If these values are equal to each other, the value of an item of the movement data in TDD is stored as the movement of the image of the region stored in step k7. If the items of the movement identifier of all data in the movement storing means 94 fail to coincide with the variable D, null indicating that no movement is designated is stored as the movement of the image. If the stored movement is null, no movement is applied to the pattern.

In step k15, the movement application process 97 applies the movement stored in step k12 to the image in the region stored in step k7. As the method of applying the movement to the image in the region, a method which is conventionally used may be employed.

Specifically, in the 14-digit identifier "10010010005002," the movement identifier is 02. As shown in Fig. 30, therefore, the movement is "leftward parallel movement." Actually, the movement item shown in Fig. 30 is expressed in another form such as a program function in which the coordinates of the upper left corner of the region, the width of the region, and the height of the region are set to be arguments. For the sake of convenience in description, the item is expressed by characters. The program for the movement of Fig. 30 may be performed by a usual method.

For example, the movement of "leftward parallel movement" can be implemented by a method in which the pattern of the designated region is stored, the original pattern is filled in the background color, an operation of drawing the stored pattern on the left side with placing a constant distance is repeated at constant time intervals, and, when the pattern reaches the left end, the pattern is returned to the right end and the same operation is restarted.

In the embodiment, one set of numerals of 14 digits obtained by arranging the region identifier and the movement identifier in this sequence so as to express the identifiers by numerals is indicated in the upper portion of the image and outside the frame. In order to realize a combination of movements or the like, a numeral or character string of a higher number of digits may be used. As the region identifier or the movement identifier, a pattern may be used together with or in place of numerals or characters. For example, a method may be used in which a rectangular frame of a fixed thickness defined as the region identifier directly encloses a region of a pattern, or an arrow or the like of a fixed shape defined as the region identifier is directly written in the pattern. To the portion of the identifiers, other identifiers such as an identifier indicating a telephone number and the name of the sender or the degree of urgency of a message, that indicating the kansei, and that indicating the contents of the message may be added so that the additional identifiers are used as information for classifying or organizing information.

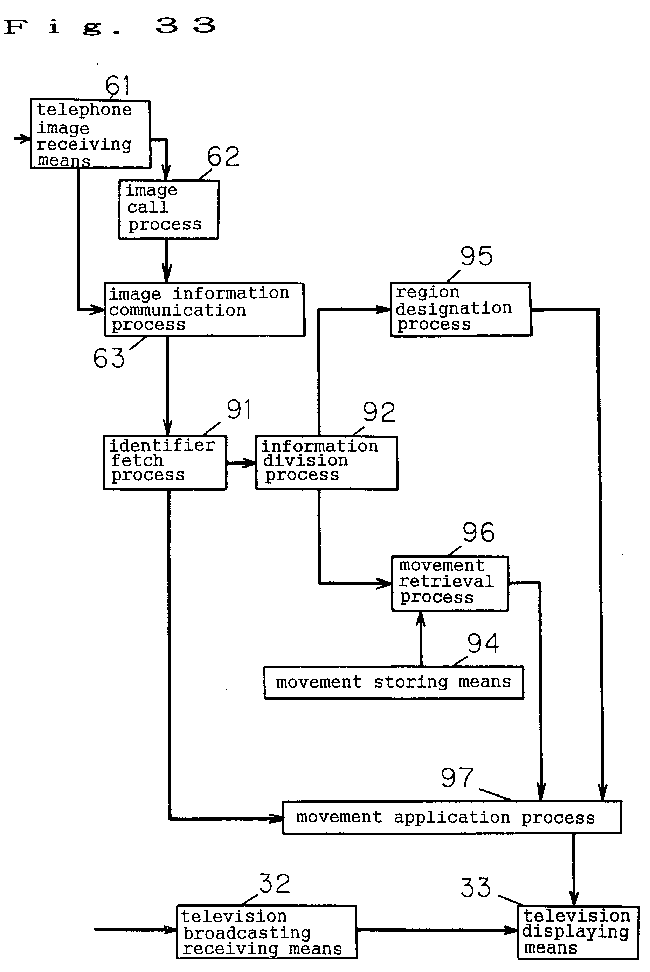

Next, in step k16, only a given portion is fetched from the image data to which the movement is applied in step k15, and then displayed on the moving image displaying means 98. In the embodiment, the given portion which is to be fetched from the image data so as to be displayed is indicated by the rectangular frame in the image data. The method of detecting the rectangular frame from the image data may be implemented by a usual image processing technique, and any one of the conventional techniques may be employed in the method. An example of the display is shown in Fig. 32. Fig. 32 is a view showing the movement of the moving image reproduced by the moving image displaying means 98.

As described above, the embodiment is characterized in that the device comprises: image receiving means for receiving image information having in a given portion a region identifier for designating a region of an image, and a movement identifier for identifying a movement; movement storing means for storing the movement with being previously correlated with the message identifier; and moving image displaying means for displaying a moving image, image information is received through the image receiving means, the region identifier and the movement identifier are fetched from the given portion of the received image information, a movement which is obtained by subjecting the movement storing means to a retrieval operation on the basis of the movement identifier is applied to an image included in a region of an image designated by the region identifier, and the resulting image is displayed on the moving image displaying means.

According to this configuration, an image included in a certain region is enabled to make various movements, only by designating a region identifier and a movement identifier which are expressed by numerals or the like. As a result, it is possible to receive a message which is moving and more pleasant as compared with a message which can be received by a conventional FAX and which has no movement.

### (Embodiment 6)

A receiving device of an embodiment of the invention will be described.

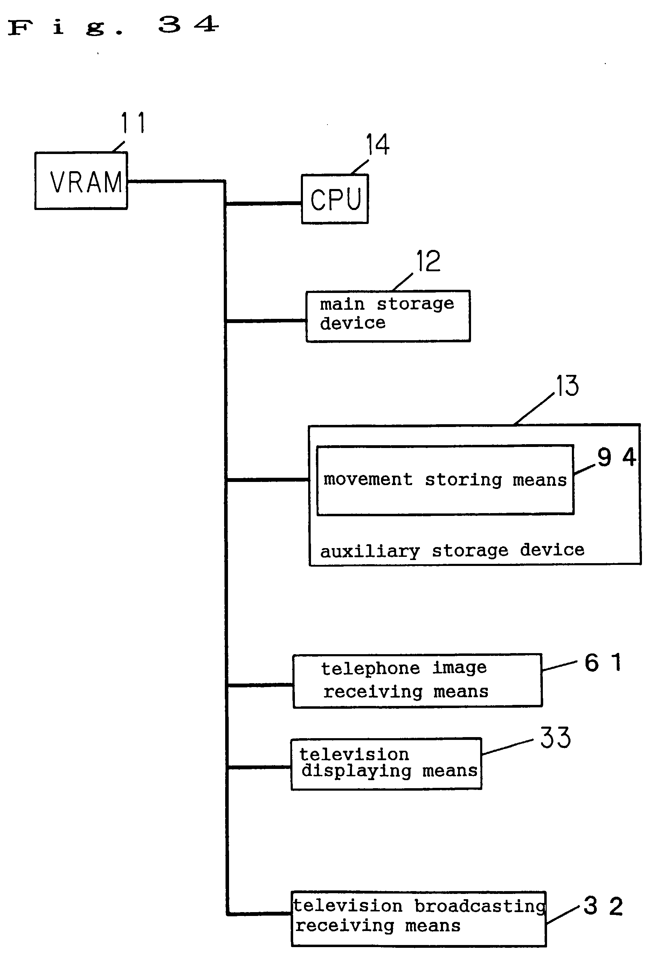

Fig. 33 is a diagram showing the system configuration of a television broadcasting receiving device which is an embodiment of the receiving device of the invention. The configuration and operation of the embodiment will be described with reference to the figure.

Fig. 33 includes the components of the system configuration of Embodiment 5 described above, and hence the components are denoted by the same reference numerals and their description is omitted.

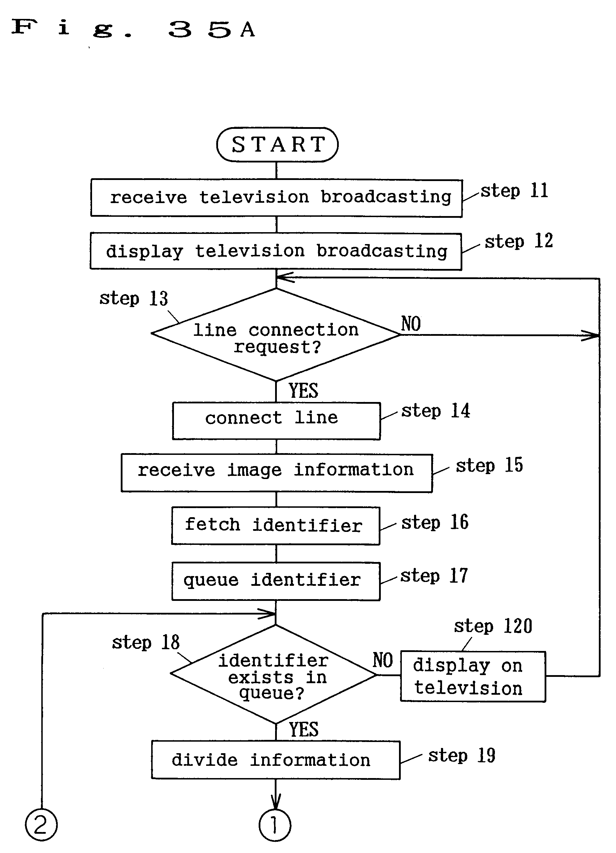

The hardware configuration in which the thus configured system is executed is shown in Fig. 34. Fig. 34 is fundamentally identical with the configuration of a general purpose computer system. The components are identical with those which have been described in the hardware configuration of the television broadcasting receiving device shown in Fig. 24 and those which have been described in the system configuration shown in Fig. 33. The identical components are denoted by the same reference numerals and their description is omitted.

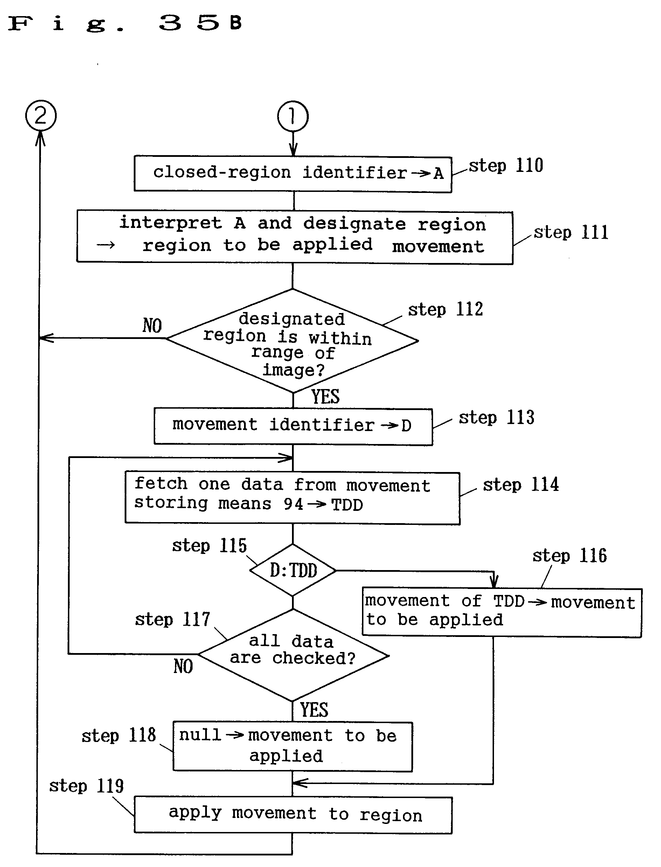

The operation of the thus configured television broadcasting receiving device will be described with reference to a flowchart of Fig. 35, and at the same time also an embodiment of the transmission/reception method of the invention will be described.

Referring to Fig. 35, in steps 11 to 14, the same processes as those of steps j1 to j4 of Embodiment 4 and shown in Fig. 25 are conducted.

In steps 15 to 119, the same processes as those of steps k1 to k15 of Embodiment 5 and shown in Fig. 29 are conducted. In the embodiment, however, the process which is conducted by the image receiving means 41 in Embodiment 5 is conducted by the telephone image receiving means 61.

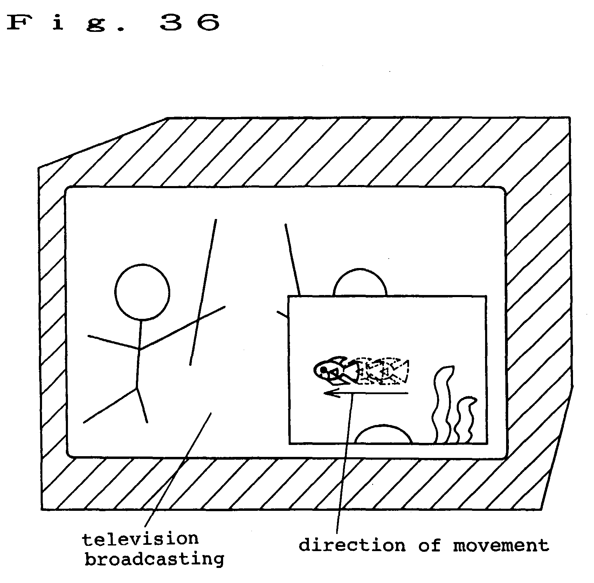

In step 120, a given portion is fetched from the image data to which a movement is applied in step 119, and displayed on the television displaying means 33 with being superimposed on a television program displayed on the television displaying means 33. The process then proceeds to step 13. As shown in Fig. 36, for example, the display is conducted so as to be superimposed on the screen of the television broadcasting. Fig. 36 is a view showing the state where image information transmitted from the transmitting device is reproduced as described above and displayed on the television displaying means 33 with being superimposed on a screen of a television broadcasting.

As described above, the embodiment is characterized in that the device comprises: telephone image receiving means, connected to a telephone line, for receiving image information having in a given portion a region identifier for designating a region of an image, and a movement identifier for identifying a movement; television broadcasting receiving means for receiving a television broadcasting; movement storing means for storing a movement with being previously correlated with the movement identifier; and television displaying means for displaying a television broadcasting or a moving image, a television broadcasting is received by the television receiving means, the received broadcasting is displayed on the television displaying means, the line is connected when a line connection request is received through the telephone line connected to the telephone image receiving means, image information is received by the telephone image receiving means through the connected line, the region identifier and the movement identifier are fetched from the given portion of the received image information, a movement which is obtained by subjecting the movement storing means to a retrieval operation on the basis of the movement identifier is applied to an image included in the region of the image designated by the region identifier, and the resulting image is displayed on the television displaying means.

According to this configuration, an original moving message produced by the sender can be received by the television receiving device. As a result, usually, a television broadcasting is enjoyed, and, only when a message is received, it is possible to see the original moving message with being superimposed on the television broadcasting. Consequently, the receiver is not requested to prepare an apparatus dedicated for reception or to conduct a special operation for reception.

### (Embodiment 7)

Hereinafter, an information storage device of an embodiment of the invention will be described.

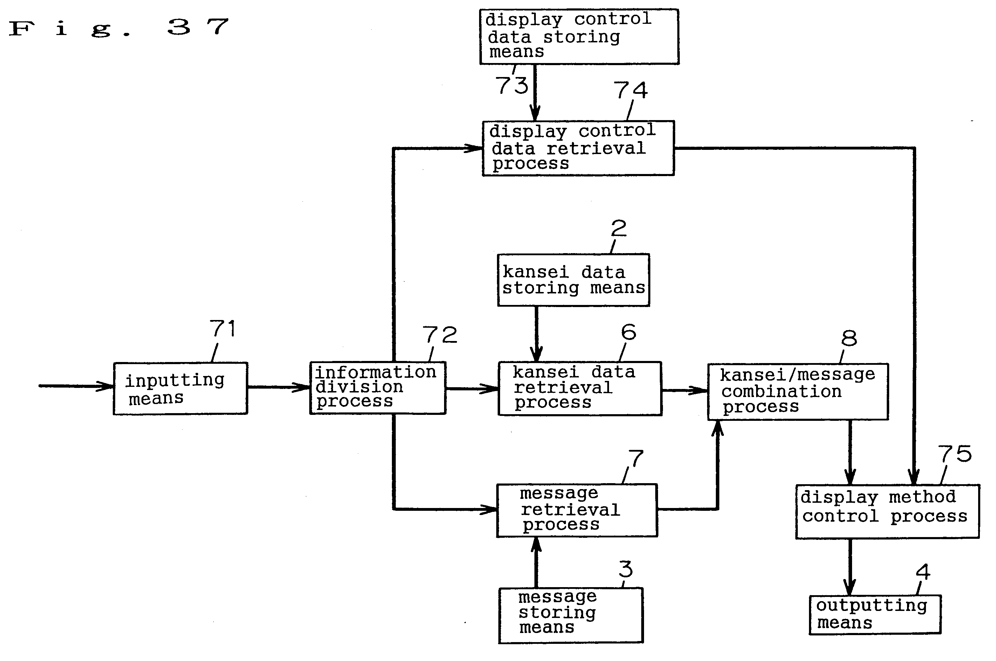

Fig. 37 is a diagram showing the system configuration of an information storage device which is an embodiment of the invention. The configuration of the embodiment will be described with reference to the figure.

In the figure, 71 denotes inputting means for accepting designation of a message identifier, a kansei identifier, and a display method identifier, from the user.

The message identifier is an identifier for identifying a message in given fixed form messages. The kansei identifier is an identifier for identifying a kansei data for identifying kansei data indicative of the kansei aspect born by the sender of information.

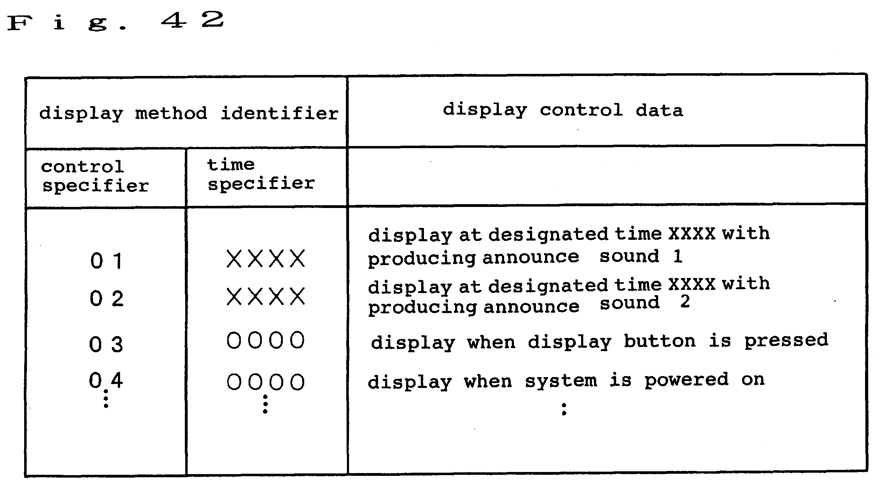

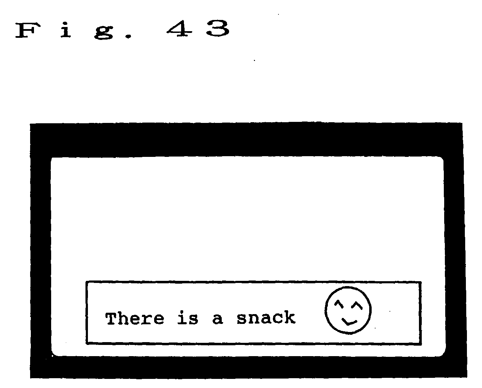

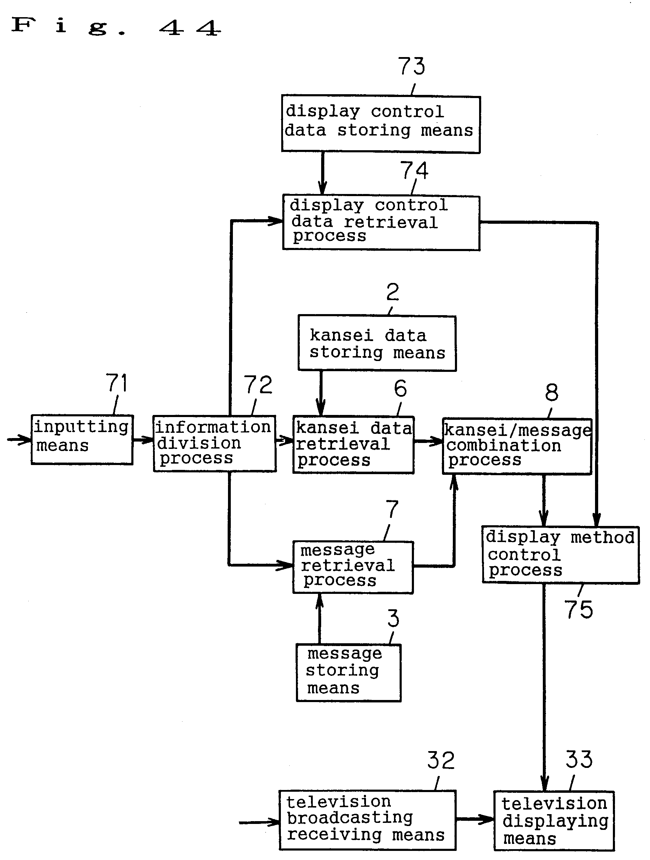

In the case where a kansei data expressed by an image as shown in Fig. 40 is used, such a kansei data has a function which can transmit the feeling such as "joyful sensation" of the sender who intends to send a message, to the receiver of the message. In expectation that the receiver feels "pleasant sensation," furthermore, the sender may add a pleasant picture, a pleasant sound or voice, a beautiful color, or the like to the message depending on the kansei of the sender.

The reference numeral 72 denotes a process in which an identifier input by the user is divided into the message identifier, the kansei identifier, and the display method identifier. The reference numeral 73 denotes display control data storing means for storing a table in which the display method identifier is correlated with a display control data for controlling the date and time when the message and the kansei data are to be displayed, the conditions of the display, the position of the display, a sound to be output when the display is done, and the graphic of the display. Examples of the sound to be output when the display is done include a melody to be played as background, and an announce sound such as a chime sound produced when a message is received.

The reference numeral 74 denotes a display control data retrieval process in which a display control data is retrieved from the table stored in the display control data storing means 73 on the basis of the display method identifier, and 75 denotes a display method control process in which a data combined in a kansei/message combination process 72 is stored, and output to outputting means 4 on the basis of the display control data retrieved in the display control data retrieval process 74.

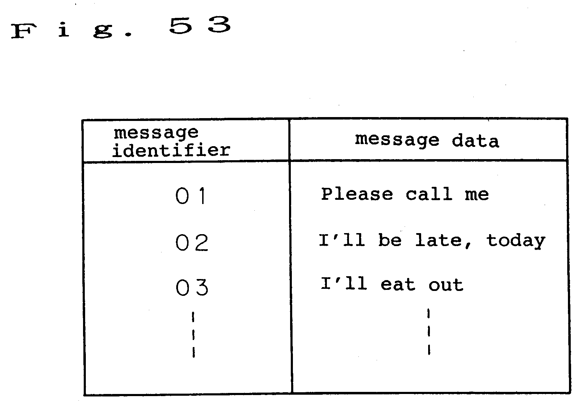

The reference numeral 2 denotes kansei data storing means for storing a table in which the kansei identifier is correlated with a kansei data expressed by an image data or a sound data (see Fig. 40), and 3 denotes message storing means for storing a table in which the message identifier is correlated with a message data expressed by a sound or voice or a text data (see Fig. 53). The reference numeral 6 denotes a kansei data retrieval process in which a kansei data is retrieved from the table stored in the kansei data storing means 2 on the basis of the kansei identifier, and 7 denotes a message retrieval process in which a message data is retrieved from the table stored in the message storing means 3 on the basis of the message identifier. The reference numeral 8 denotes kansei/message combination process in which the kansei data and the message data are combined with each other and then output to the outputting means 4. The receiving means of the invention corresponds to the inputting means 71, and the output controlling means of the invention is means including the display method control process 75, etc.

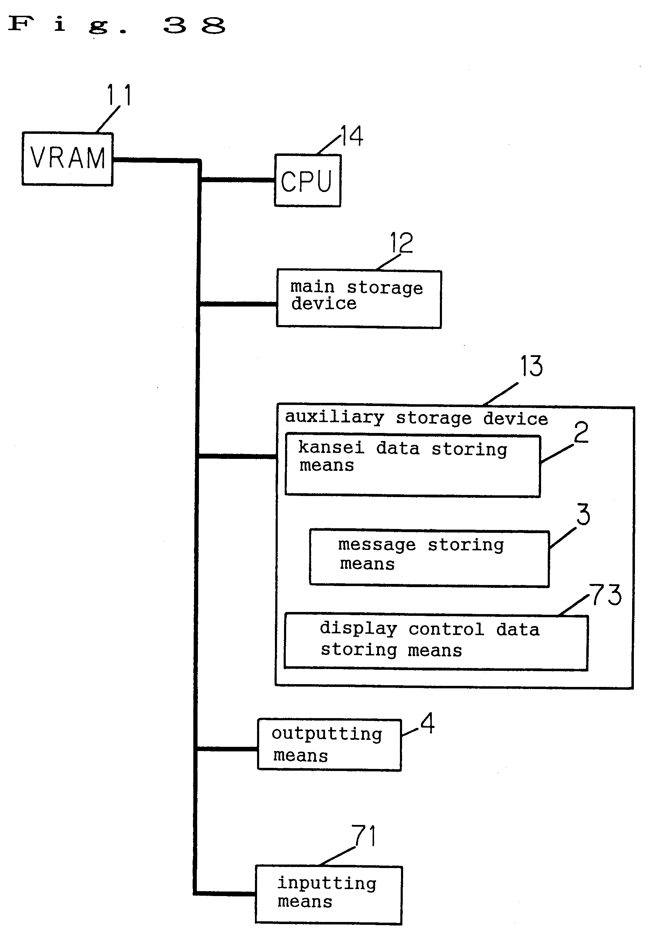

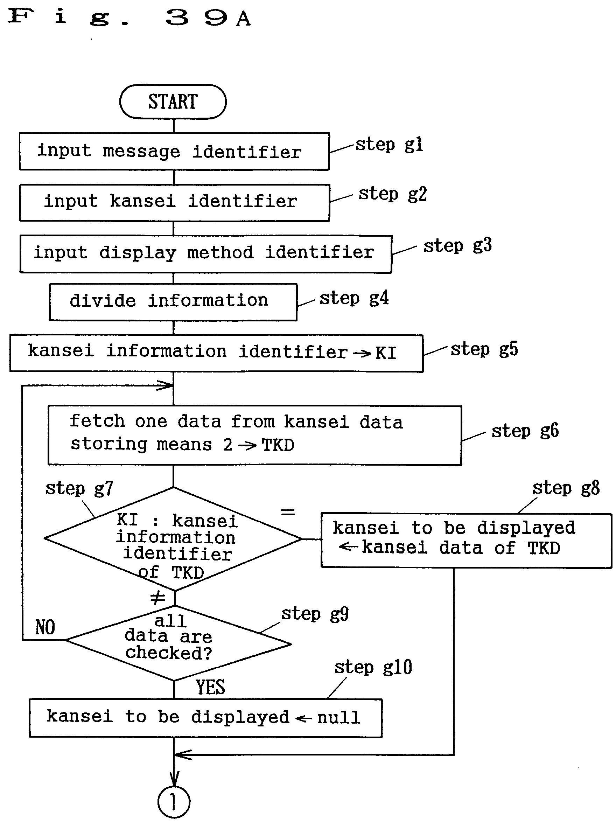

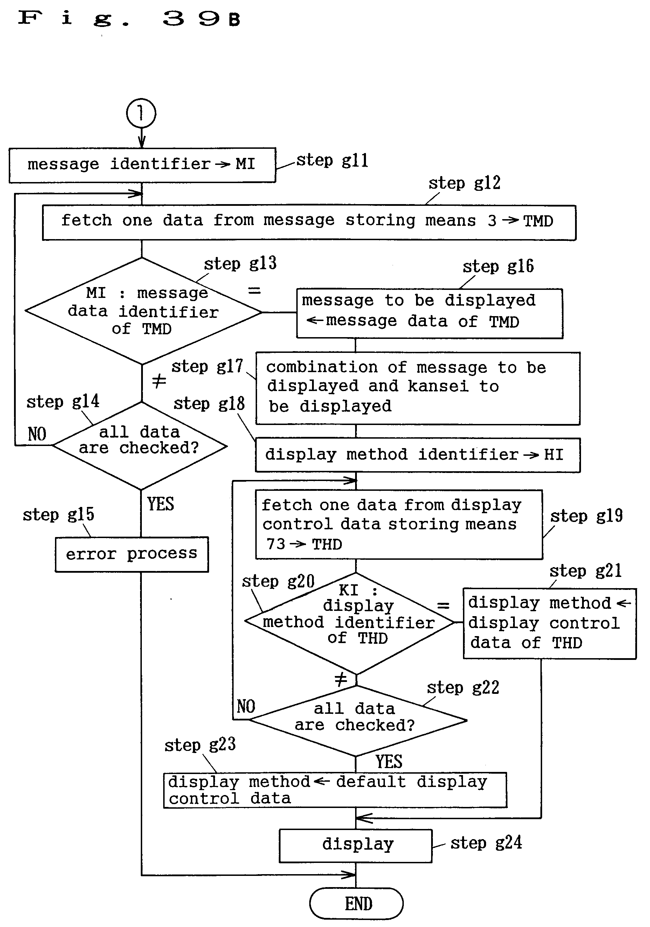

The hardware configuration in which the thus configured system is executed is shown in Fig. 38. Fig. 38 is fundamentally identical with the configuration of a general purpose computer system. Some of the components shown in Fig. 38 are identical with those which have been described in the system configuration shown in Fig. 37. The identical components are denoted by the same reference numerals and their description is omitted.

In Fig. 38, 11 denotes a VRAM which stores data to be output, 12 denotes a main storage device which is a volatile memory for storing programs, 13 denotes an auxiliary storage device which is a nonvolatile memory for storing programs and data, and 14 denotes a CPU which executes the programs stored in the main storage device 12. As described above, the hardware configuration is fundamentally identical with that of a general purpose computer system. The programs stored in the auxiliary storage device 13 are once loaded into the main storage device 12 and then executed by the CPU 14.

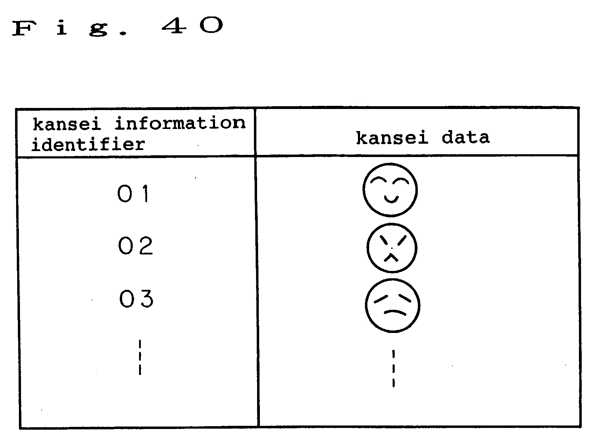

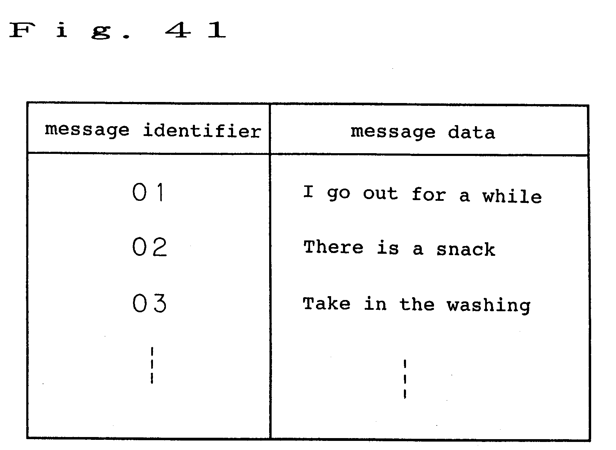

The operation of the thus configured information storage device will be described with reference to a flowchart of Fig. 39, and at the same time also an embodiment of the information storage method of the invention will be described.

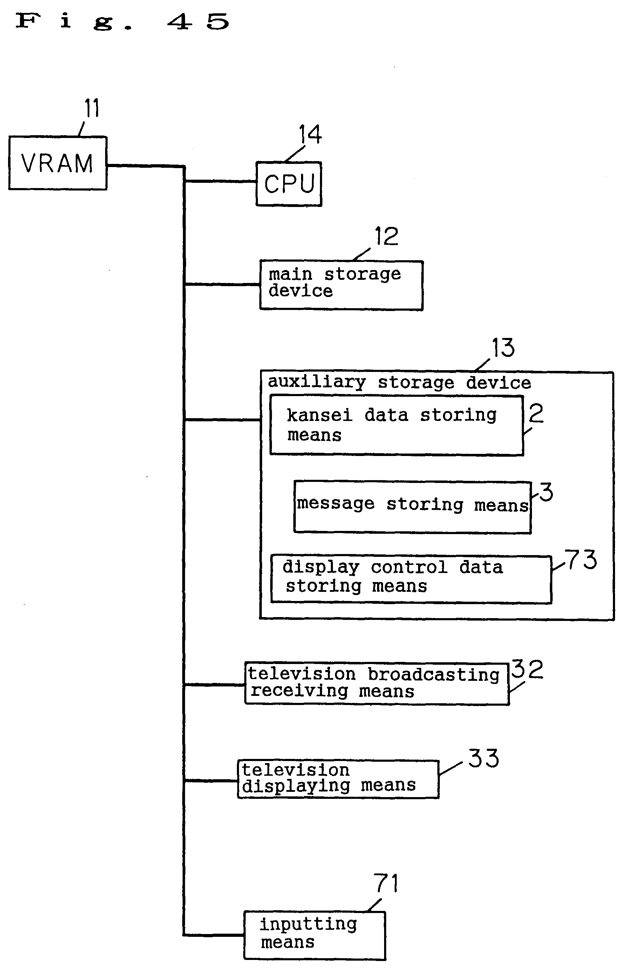

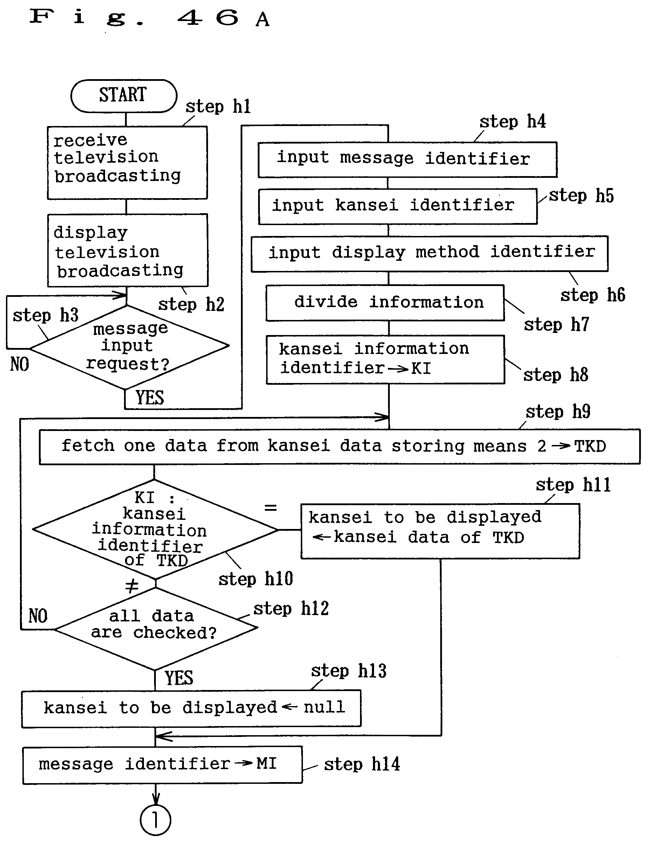

Referring to Fig. 39, in step g1, the inputting means 71 accepts an input of the message identifier from the user. In the embodiment, the message identifier consists of numerals of 2 digits such as 01 or 02 as shown in Fig. 41.

The message identifier may be a numeral or symbol string of a higher number of digits. As far as a given fixed form message can be identified, a special sound or voice, or a pattern data may be used as the message identifier. A combination of several fixed form messages may be used.

In the embodiment, ten keys of a remote controller are assumed as the inputting means 71, the message identifier is designated by sequentially pressing the keys. For example, the identifier of the message "There is a snack" in Fig. 41 is 02. When the designation of this message is to be input, "0" and "2" keys of the remote controller are sequentially pressed.

Next, in step g2, the inputting means 71 accepts an input of the kansei identifier. A kansei data indicates a line drawing or a background data expressing, for example, "regretful sensation" born by the sender. The kansei identifier in the embodiment consists of numerals of 2 digits such as 01 or 02 as shown in Fig. 40. Actually, the kansei data of Fig. 40 have the form of image data. Such image data must be indicated in the form of very long numeral strings. In order to facilitate the understanding, the kansei data are expressed in the form of pictures in Fig. 40. When each image data is actually output, a picture such as shown in Fig. 40 is displayed.

The kansei identifier may be a numeral or symbol string of a larger digit number. Alternatively, as far as a given kansei data can be identified, a special sound or voice, or a pattern data may be used as the kansei identifier. In the embodiment, a kansei data is an image data indicating a line drawing. Alternatively, any data which can express the kansei, such as an image data of another kind, or a sound data may be used.

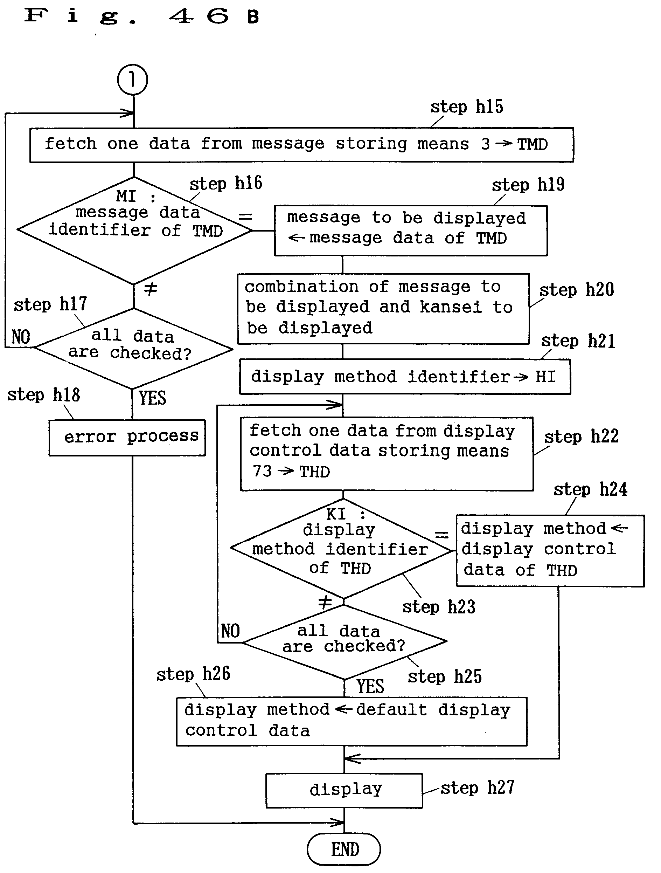

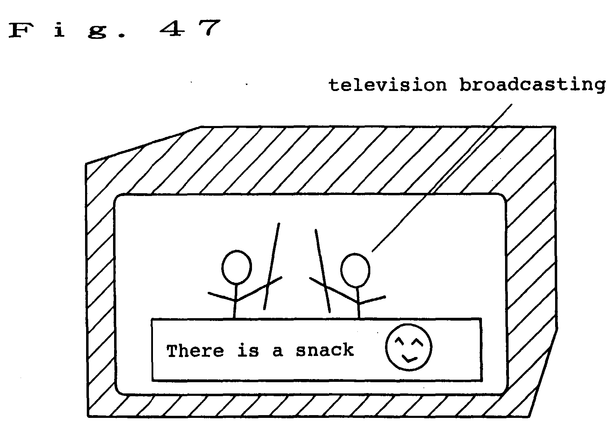

Next, in step g3, the inputting means 71 accepts an input of the display method identifier. A display control data is indicated by, for example, control program codes for executing "display at a designated time 19: 00 with producing announce sound 1." In the embodiment, as the display method identifier, numerals of 6 digits consisting of a control specifier of 2 digits such as 01 or 02, and a time specifier of 4 digits such as 1900 as shown in Fig. 42 are input.

The display method identifier may be a numeral or symbol string of a higher number of digits which is configured by, for example, adding a specifier indicative of a year, a month, and a day. From the message identifier and the kansei identifier which are input by the user, an appropriate display method identifier may be automatically produced.

In step g4, the input numeral string is divided into the message identifier, the kansei identifier, and the display method identifier. In the embodiment, the 10-digit numeral string input by the user is divided into numeral strings of 2 digits, 2 digits, and 6 digits in this sequence as starting from the beginning, and the numeral strings are recognized as the message identifier, the kansei identifier, and the display method identifier, respectively. This process is conducted in the information division process 72.

In step g5, the kansei information identifier which is obtained by dividing the received information in step g4 is substituted into a variable KI.

In steps g6 to g10, in the kansei data retrieval process 6, data are sequentially fetched from the kansei data storing means 2, and a data having a kansei identifier which is equal to the kansei identifier substituted into the variable KI is retrieved. Data in the form of a table such as shown in Fig. 40 are previously accumulated in the kansei data storing means 2. Each time when step g6 is executed, a data is fetched in a sequence starting from the first one and then substituted into a variable TKD, and the value of an item of the kansei identifier in TKD is compared with that of the variable KI. If these values are equal to each other, the value of an item of the kansei data in TKD is stored as "kansei to be displayed." If the items of the kansei identifier of all data in the kansei data storing means 2 fail to coincide with the variable KI, the process proceeds to step g10 in which null indicating that a data adequate to "kansei to be displayed" does not exist is substituted.

When the kansei identifier obtained by dividing the information in step g4 is 03 and this value is substituted into KI, for example, an image data indicating "pleasant sensation" which is the value of the item of the kansei data of the data in which the item of the kansei identifier has a value of 01 is retrieved from the kansei data storing means 2 such as shown in Fig. 40, and stored as the kansei to be displayed.

In steps g11 to g16, the message identifier obtained by dividing the received information in step g4 is substituted into a variable MI. In the message retrieval process 7, data are sequentially fetched from the message storing means 3, and a data having a message identifier which is equal to the message identifier substituted into the variable MI is retrieved. Data in the form of a table such as shown in Fig. 41 are previously accumulated in the message storing means 3. Each time when step g12 is executed, a data is fetched in a sequence starting from the first one and then substituted into a variable TMD, and the value of an item of the message identifier in TMD is compared with that of the variable MI. If these values are equal to each other, the value of an item of the message data in TMD is stored as "message to be displayed." If the items of the message identifier of all data in the message storing means 3 fail to coincide with the variable MI, the process proceeds to step g15. Since there is no adequate message to be displayed, the error process is conducted and the receiving process is terminated. In the error process, a process of outputting information indicating that there is no message to be displayed to the outputting means 4, and other processes are conducted.

When the message identifier obtained by dividing the received information in step g4 is 01 and this value is substituted into MI, for example, "There is a snack" which is the value of the item of the message data of the data in which the item of the message identifier has a value of 02 is retrieved from the message storing means 3 such as shown in Fig. 41, and stored as the message to be displayed.

In step g17, the value of the item of the kansei data of TKD stored in step g8 as the kansei to be displayed, and the value of the item of the message data of TMD stored in step g16 as the message to be displayed are combined with each other in the kansei/message combination process 8. This combination is performed by simply arranging the values and then combining them.

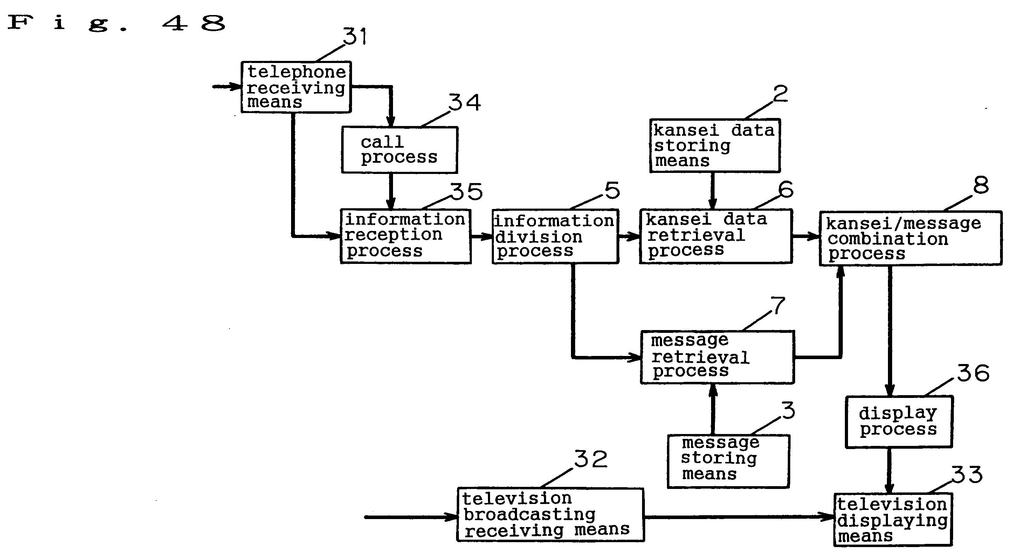

When the data stored in step g8 as the kansei to be displayed is the image data indicating "pleasant sensation" and the data stored in step g6 as the message to be displayed is "There is a snack," for example, the resulting image in which the image data indicative of pleasant sensation is added to the message "There is a snack" is obtained in this step (see Fig. 43).

When null is stored in this step as the kansei to be displayed, the process result consists of only the image data indicative of the kansei.

In step g18, the display method identifier obtained by dividing the information in step g4 is substituted into a variable HI. In the display control data retrieval process 74, data are sequentially fetched from the display control data storing means 72, and a data having a display method identifier which is equal to the display method identifier substituted into the variable HI is retrieved. Data in the form of a table such as shown in Fig. 42 are accumulated in the display control data storing means 72. Each time when step g18 is executed, a data is fetched in a sequence starting from the first one and then substituted into a variable THD, and the value of an item of the display method identifier in THD is compared with that of the variable HI. If these values are equal to each other, the value is stored as a control program code for executing the item of the display control data of THD. If the items of the display method identifier of all data in the display control data storing means 62 fail to coincide with the variable HI, the first control program code of the display control data storing means is stored as the standard display method.

When the display method identifier obtained by dividing the information in step g4 is 03 and this value is substituted into HI, for example, a control program code of the item of the display control data, indicating "to be displayed when display button is pressed," of the data in which the item of the kansei identifier has a value of 03 is stored from the display control data storing means 72 such as shown in Fig. 42.

In step g24, the result obtained in step g17 is displayed on the outputting means 4 in accordance with the control program code obtained in step g18. An output image such as shown in Fig. 43 is displayed on the outputting means 4.

As described above, the embodiment is characterized in that the device comprises: inputting means for inputting a kansei identifier for identifying a kansei data indicating a kansei aspect of information, a message identifier for identifying a given fixed form message, and a display method identifier for displaying the kansei data and the fixed form message in a designated method; kansei data storing means for storing a table in which the kansei identifier is correlated with a kansei data expressed by an image data or a sound data; message storing means for storing a table in which the message identifier is correlated with a message data expressed by a sound or voice or a text data; display control data storing means for storing a table in which the display method identifier is correlated with a display control data for controlling a date and time of a display, conditions of the display, a position of the display, a sound to be output when the display is done, and a graphic of the display; and outputting means for outputting the kansei data and the message data, the kansei identifier, the message identifier, and the display method identifier are input through the inputting means, the kansei data is retrieved from the table stored in the kansei data storing means on the basis of the kansei identifier, the message data is retrieved from the table stored in the message storing means on the basis of the message identifier, the display control data is retrieved from the table stored in the display data storing means on the basis of the display method identifier, and the kansei data and the message data are combined with each other and output to the outputting means in accordance with an input display method.

According to this configuration, when the message identifier, the kansei identifier, and the display method identifier are designated, a communication in which a message and kansei information are combined with each other can be conducted by a designated method. Particularly, the date and time of the display, the conditions of the display, the position of the display, the sound to be output when the display is done, and the graphic of the display can be controlled only by designating the display method identifier. In a home, a message from the mother to a child indicating "At 3 o'clock, take in the washing" is displayed at 2: 50 with producing a sound "PIN PON," or, when the father returns from a company and turns on the device, a communication "Please take sashimi kept in the refrigerator" can be displayed. As a result, communications with a person who is not at the site can be successfully achieved.

### (Embodiment 8)

Hereinafter, a television broadcasting receiving device of an embodiment of the invention will be described.

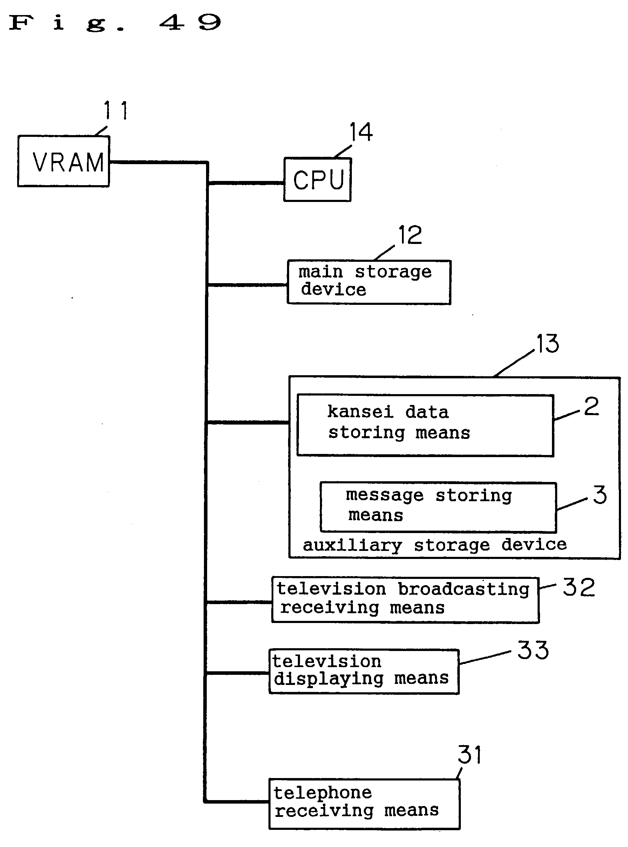

Fig. 44 is a diagram showing the system configuration of a television broadcasting receiving device which is an embodiment of the invention. The configuration of the embodiment will be described with reference to the figure.

Fig. 44 includes components identical with those of the system configuration of Embodiment 7 described above. Therefore, the components are denoted by the same reference numerals and their description is omitted.

Television broadcasting receiving means 32 is means for receiving a television broadcasting, and television displaying means 33 is means for displaying the television broadcasting, or a kansei data and a message data.

The hardware configuration in which the thus configured system is executed is shown in Fig. 45. Fig. 45 is fundamentally identical with the configuration of a general purpose computer system. The components are identical with those of the television broadcasting receiving device shown in Fig. 49 and those of the system configuration shown in Fig. 44. The identical components are denoted by the same reference numerals and their description is omitted.

The operation of the thus configured information storage device will be described with reference to a flowchart of Fig. 46, and at the same time also an embodiment of the information storage method of the invention will be described.

Referring to Fig. 46, in steps h1 to h2, the television broadcasting receiving means 32 receives a television broadcasting by a method which is conventionally used, and the television broadcasting is displayed on the television displaying means 33.

In step h3, it is judged whether a message input request is received from the remote controller of the television or not. In the embodiment, a button of "Message input" is added to the remote controller of the television. When it is detected that this button is pressed, it is assumed that the message input request is issued. If the message input request is not received, the detection of the request is continued. If the message input request is received, the process proceeds to step h5.

In steps h4 to h26, the same processes as those of steps g1 to g23 of the above-described embodiment and shown in Fig. 39 are conducted.

In step h27, the result obtained in step h20 is displayed together with a television program displayed on the television displaying means 33, in accordance with the control program code obtained in step h24 or h26, so that an output such as shown in Fig. 47 is obtained. Fig. 47 is a view showing the state where a message and kansei data information which are previously input are reproduced as described above, and displayed at the designated time on the television displaying means 33 with being superimposed on a screen of the television broadcasting.

As described above, the embodiment is characterized in that the device comprises: inputting means for inputting a kansei identifier for identifying a kansei data indicating a kansei aspect of information, a message identifier for identifying a given fixed form message, and a display method identifier for displaying the kansei data and the fixed form message in a designated method; television broadcasting receiving means for receiving a television broadcasting; kansei data storing means for storing a table in which the kansei identifier is correlated with a kansei data expressed by an image data or a sound data; message storing means for storing a table in which the message identifier is correlated with a message data expressed by a sound or voice or a text data; display control data storing means for storing a table in which the display method identifier is correlated with a display control data for controlling a date and time of a display, conditions of the display, a position of the display, a sound to be output when the display is done, and a graphic of the display; and outputting means for outputting the television broadcasting, or the kansei data and the message data, the kansei identifier, the message identifier, and the display method identifier are input through the inputting means, the kansei data is retrieved from the table stored in the kansei data storing means on the basis of the kansei identifier, the message data is retrieved from the table stored in the message storing means on the basis of the message identifier, the display control data is retrieved from the table stored in the display data storing means on the basis of the display method identifier, and means for combining the kansei data and the message data with each other, and for displaying the combined data in addition to the television broadcasting displayed on the television displaying means in accordance with an input display method.

According to this configuration, a communication in which kansei information and a message are combined with each other can be conducted by using a television receiving device. As a result, the user is not requested to prepare an apparatus dedicated for communication or to conduct a special operation for seeing a communication, with the result that a message can be rationally delivered. When a display method of "a communication is displayed at a designated time" is designated, for example, a message is displayed at the designated time with being superimposed on the television broadcasting. Even when the user enjoys the television broadcasting and is enthusiasm about it, therefore, the user can be prevented from forgetting important affairs. When a display method of "when turned on, a message is displayed" is designated, a message is displayed with being superimposed on the television broadcasting at the timing when a member of a family who returns home late turns on the television. Therefore, a message can be delivered in a natural manner.

In the above, an embodiment in which a message is designated by using a remote controller or the like has been described. The invention is not restricted to this. For example, a message or the like may be transmitted from an external telephone.

Hereinafter, another embodiment in which a message or the like is externally designated by using a telephone, etc. will be described.

Fig. 48 is a diagram showing the system configuration of a television broadcasting receiving device which is used in the embodiment.

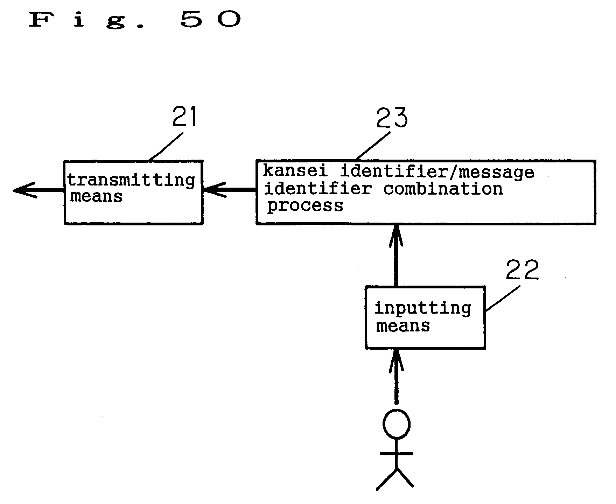

In the figure, 31 denotes telephone receiving means which is connected to a telephone line and which receives information consisting of a kansei identifier for identifying a kansei data indicating a kansei aspect of information, and a message identifier for identifying a given fixed form message. The kansei identifier and the message identifier are transmitted from a transmitting device (see Fig. 50) which will be described later. The reference numeral 32 denotes television broadcasting receiving means for receiving a television broadcasting, 33 denotes television displaying means for displaying the television broadcasting, or a kansei data and a message data, 34 denotes a call process in which, when a line connection request is received through the telephone line connected to the telephone receiving means 31, the device is connected to the telephone line, and 35 denotes an information reception process in which information is received by the telephone receiving means 31 through the telephone line.

The reference numeral 2 denotes kansei data storing means for storing a table in which the kansei identifier is correlated with a kansei data expressed by an image data or a sound data (see Fig. 40), and 3 denotes message storing means for storing a table in which the message identifier is correlated with a message data expressed by a sound or voice or a text data (see Fig. 53). The reference numeral 5 denotes an information division process in which information is received from the telephone receiving means 31 and the received information is divided into the kansei identifier and the message identifier, 6 denotes a kansei data retrieval process in which a kansei data is retrieved from the table stored in the kansei data storing means 2 on the basis of the kansei identifier, 7 denotes a message retrieval process in which a message data is retrieved from the table stored in the message storing means 3 on the basis of the message identifier, and 8 denotes kansei/message combination process in which the kansei data and the message data are combined with each other and then output to the outputting means 4.

The reference numeral 36 denotes a display process in which a combination of the kansei data and the message data is displayed in addition to the television broadcasting displayed on the television displaying means 33.

The hardware configuration in which the thus configured system is executed is shown in Fig. 49. Fig. 49 is fundamentally identical with the configuration of a general purpose computer system. Some of the components shown in Fig. 49 are identical with those which have been described in the system configuration shown in Fig. 48. The identical components are denoted by the same reference numerals and their description is omitted.

In Fig. 49, 11 denotes a VRAM which stores data to be displayed or output, 12 denotes a main storage device which is a volatile memory for storing programs, 13 denotes an auxiliary storage device which is a nonvolatile memory for storing programs and data, and 14 denotes a CPU which executes the programs stored in the main storage device 12. As described above, the hardware configuration is fundamentally identical with that of a general purpose computer system. The programs stored in the auxiliary storage device 13 are once loaded into the main storage device 12 and then executed by the CPU 14.

Next, the configuration of the above-mentioned transmitting device will be described with reference to Fig. 50.

In Fig. 50, 21 denotes transmitting means for transmitting information consisting of a kansei identifier for identifying a kansei data indicating a kansei aspect of information, and a message identifier for identifying a given fixed form message, 22 denotes inputting means for accepting designation of a kansei identifier and a message identifier from the user, and 23 denotes a kansei identifier/message identifier combination process in which the inputting means 22 accepts designation of a kansei identifier and a message identifier from the user, the kansei identifier and the message identifier is combined with each other on the basis of the designation, the combined message is transmitted through the transmitting means 21.

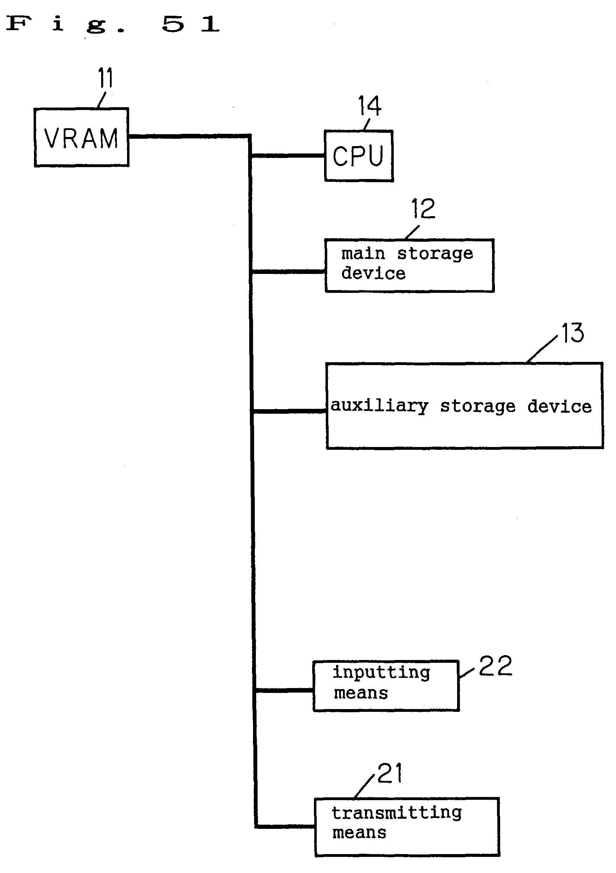

The hardware configuration in which the thus configured system is executed is shown in Fig. 51. Fig. 51 is fundamentally identical with the configuration of a general purpose computer system. Some of the components of Fig. 51 are identical with those which have been described in the hardware configuration shown in Fig. 4 and the system configuration shown in Fig. 50. The identical components are denoted by the same reference numerals and their description is omitted.

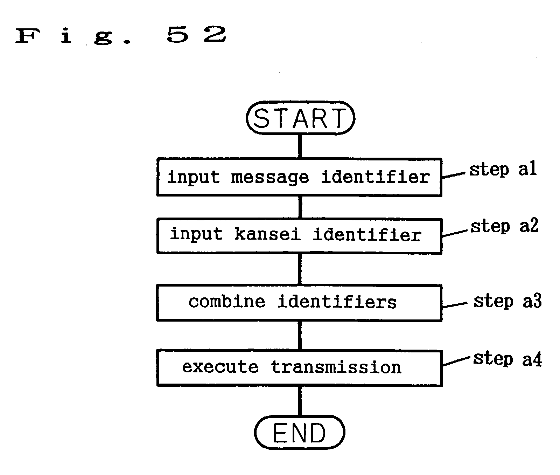

With respect to the operation of the thus configured embodiment, the operation of the transmitting device will be first described with reference to a flowchart of Fig. 52.

Referring to the figure, in step a1, the inputting means 22 accepts an input of the message identifier from the user. In the embodiment, the message identifier consists of numerals of 2 digits such as 01 or 02 as shown in Fig. 53.

The message identifier may be a numeral or symbol string of a higher number of digits. As far as a given fixed form message can be identified, a special sound or voice, or a pattern data may be used as the message identifier.

In the embodiment, numeral keys of a telephone are assumed as the inputting means 22, the message identifier is designated by sequentially pressing the numeral keys. For example, the identifier of the message "Please call me" is 01 as shown in Fig. 53. When the designation of this message is to be input, "0" and "1" of the telephone are sequentially pressed.

In step a2, the inputting means 22 accepts an input of the kansei identifier from the user. A kansei data is indicated by an image data of a line drawing expressing, for example, "sad sensation." The kansei identifier in the embodiment consists of numerals of 2 digits such as 01 or 02 as shown in Fig. 40. Actually, the kansei data of Fig. 40 have the form of image data representing line drawings. Such image data must be indicated in the form of very long numeral strings. In order to facilitate the understanding, the kansei data are expressed in the form of pictures in Fig. 40. When each image data is actually output, a picture such as shown in Fig. 40 is displayed. In Fig. 40, the kansei identifier 01 corresponds to an image data indicating "pleasant sensation," the kansei identifier 02 to an image data indicating "angry sensation," and the kansei identifier 03 to an image data indicating "sad sensation."

The kansei identifier may be a numeral or symbol string of a larger digit number. Alternatively, as far as a given kansei data can be identified, a special sound or voice, or a pattern data may be used as the kansei identifier.

In the embodiment, a kansei data is an image data indicating a line drawing. Alternatively, an image data indicating an image other than a line drawing, a sound data indicating a sound expressing the kansei, or a combination of an image data and a sound data may be used.

As described above, a kansei data has a function which can transmit the feeling such as "joyful sensation" of the sender who intends to send a message, to the receiver of the message. It is a matter of course that, in expectation that the receiver feels, for example, "pleasant sensation," the sender can add a pleasant music, a bird's twitterings, a pleasant sound or voice, a beautiful color, or the like to the message depending on the kansei of the sender.

In the embodiment, in order to input the designation of "sad sensation" of the sender, "0" and "3" of the telephone are sequentially pressed in step a2.

In step a3, the message identifier and the kansei identifier which are input in steps a1 and a2 are combined with each other in the kansei identifier/message identifier combination process 23. This combination is performed only by arranging the message identifier and the kansei identifier which are input. When the message identifier input in step a1 is 01 and the kansei identifier input in step a2 is 03, for example, 0103 which is produced by arranging 01 and 03 is obtained as a result of the process.

In step a4, the process result obtained in step a3 is transmitted through the transmitting means 21. In the embodiment, for example, a telephone is assumed as the transmitting means, and the numeral string obtained in step a3 is converted into a DTMF signal and then transmitted through a telephone line. The conversion to a DTMF signal may be implemented by a usual method which is conventionally used.

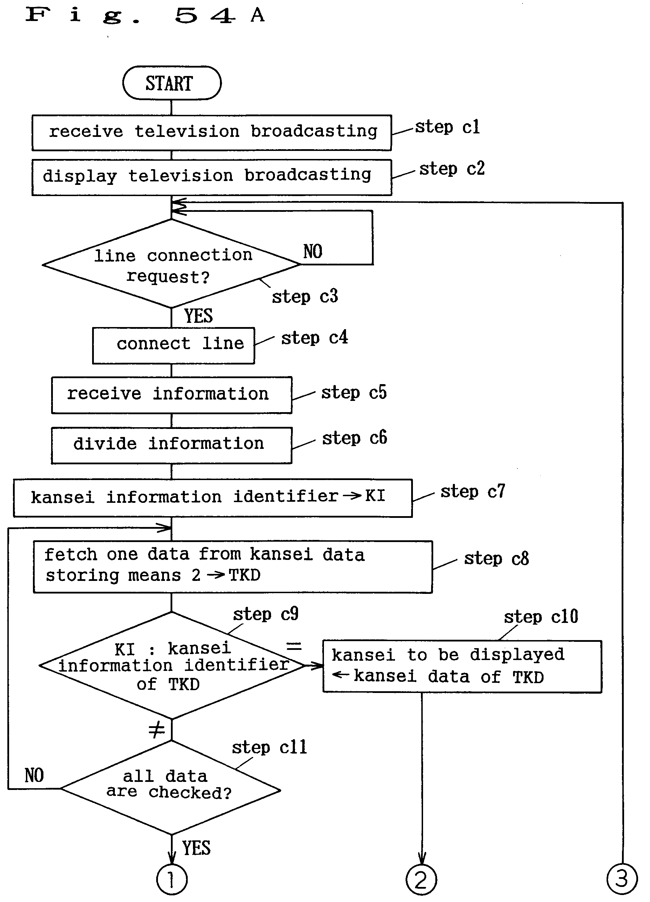

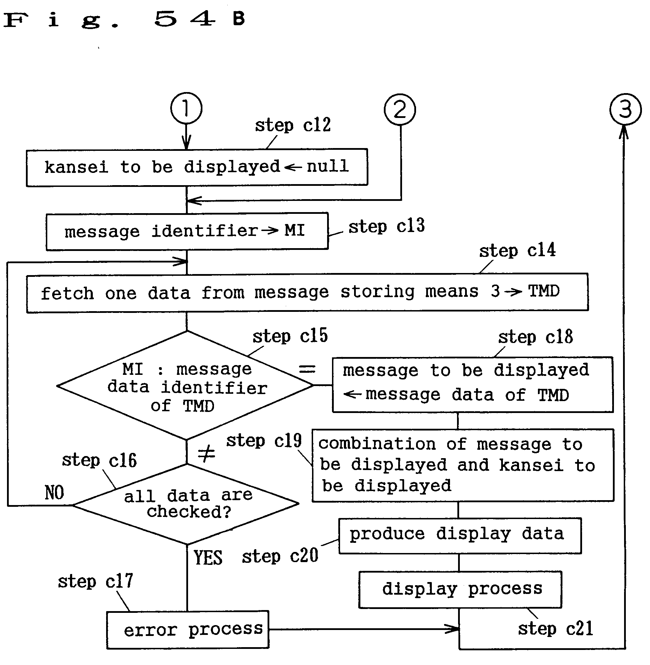

The operation of the television broadcasting receiving device of the embodiment will be described with reference to a flowchart of Fig. 54.

Referring to the figure, in steps c1 and c2, the television broadcasting receiving means 32 receives a television broadcasting by a method which is conventionally used, and the television broadcasting is displayed on the television displaying means 33.

In steps c3 to c4, it is judged whether a line connection request is received through the telephone line connected to the telephone receiving means 31 or not. If the line connection request is not received, the detection of the request is continued. If the line connection request is received from the transmitting means 21, the line connection is conducted in the call process 34. The method of connecting the line is conducted in accordance with a usual connecting process for a telephone line.

In steps c5 to c7, information consisting of the message identifier and the kansei identifier is received through the information reception process 35, the information is divided into the message identifier and the kansei identifier, and the kansei identifier is substituted into a variable KI. In the embodiment, the telephone receiving means 31 to the information reception process 35 receive a DTMF signal sent through the telephone line, and convert the signal into a numeral string. This conversion may be implemented by a usual method which is conventionally used. In the embodiment, the division into the message identifier and the kansei identifier is conducted in the following manner. It is previously determined that the former 2 digits constitute a message identifier and the latter 2 digits constitute a kansei identifier. When 4-digit information is transmitted, the 4-digit numeral string is simply divided in two. This process is conducted in an information division process 5.

In steps c8 to c12, data are sequentially fetched from the kansei data storing means 2 in the kansei data retrieval process 6, and a data having a kansei identifier which is equal to the kansei identifier substituted into the variable KI is retrieved. Data in the form of a table such as shown in Fig. 40 are previously accumulated in the kansei data storing means 2. Each time when step c8 is executed, a data is fetched in a sequence starting from the first one and then substituted into a variable TKD, and the value of an item of the kansei identifier in TKD is compared with that of the variable KI. If these values are equal to each other, the value of an item of the kansei data in TKD is stored as "kansei to be displayed." If the items of the kansei identifier of all data in the kansei data storing means 2 fail to coincide with the variable KI, the process proceeds to step c12 in which null indicating that a data adequate to "kansei to be displayed" does not exist is substituted.

When the kansei identifier obtained by dividing the information in step c6 is 03 and this value is substituted into KI, for example, an image data indicating "sad sensation" which is the value of the item of the kansei data of the data in which the item of the kansei identifier has a value of 03 is retrieved from the kansei data storing means 2 such as shown in Fig. 40, and stored as the kansei to be displayed.

In steps c13 to c18, the message identifier obtained by dividing the received information in step c6 is substituted into a variable MI. In the message retrieval process 7, data are sequentially fetched from the message storing means 3, and a data having a message identifier which is equal to the message identifier substituted into the variable MI is retrieved. Data in the form of a table such as shown in Fig. 53 are previously accumulated in the message storing means 3. Each time when step c14 is executed, a data is fetched in a sequence starting from the first one and then substituted into a variable TMD, and the value of an item of the message identifier in TMD is compared with that of the variable MI. If these values are equal to each other, the value of an item of the message data in TMD is stored as "message to be displayed." If the items of the message identifier of all data in the message storing means 3 fail to coincide with the variable MI, the process proceeds to step c17. Since there is no adequate message to be displayed, the error process is conducted and the receiving process is terminated. In the error process, a process of outputting information indicating that there is no message to be displayed to the television displaying means 33, and other processes are conducted.

When the message identifier obtained by dividing the received information in step c6 is 01 and this value is substituted into MI, for example, "Please call me" which is the value of the item of the message data of the data in which the item of the message identifier has a value of 01 is retrieved from the message storing means 3 such as shown in Fig. 53, and stored as the message to be displayed.

In step c19, the value of the item of the kansei data of TKD stored in step c10 as the kansei to be displayed, and the value of the item of the message data of TMD stored in step c18 as the message to be displayed are combined with each other in the kansei/message combination process 8. This combination is performed by simply arranging the values and then combining them.

When the data stored in step c10 as the kansei to be displayed is the image data indicating "sad sensation" and the data stored in step c8 as the message to be displayed is "Please call me," for example, the resulting image in which the image data indicative of sad sensation is added to the message "Please call me" is obtained in this step.

When null is stored in this step as the kansei to be displayed, the process result consists of only the image data indicative of the kansei.

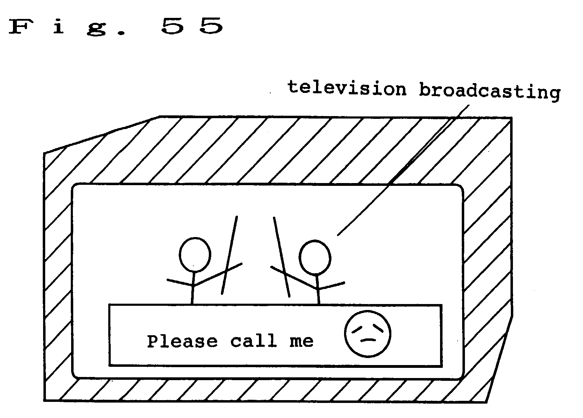

In steps c20 to c21, the combination of the message data and the kansei data obtained as a result of the process in step c19 is displayed on the television displaying means 33 with being superimposed on a television program displayed on the television displaying means 33, in the display process 36. For example, as shown in Fig. 55, the combination of the message and the kansei data is displayed on the television broadcasting.

The execution of the operations shown in the flowchart of Fig. 54 is started when the device is powered on, and stopped when the device is powered off.

As described above, according to the embodiment, a television broadcasting is received by the television receiving means, the received broadcasting is displayed on the television displaying means, the line is connected when a line connection request is received through the telephone line connected to the telephone receiving means, information is received by the telephone receiving means through the connected line, the received information is divided into a kansei identifier and a message identifier, a kansei data is retrieved from the table stored in the kansei data storing means on the basis of the kansei identifier, a message data is retrieved from the table stored in the message storing means on the basis of the message identifier, and the kansei data and the message data are combined with each other and then displayed in addition to the television broadcasting displayed on the television displaying means.

According to this configuration, a message combined with kansei information can be received by using the television receiving device. As a result, usually, a television broadcasting is enjoyed, and, only when a message is received, it is possible to see the message combined with kansei information with being superimposed on the television broadcasting. Consequently, the receiver is not requested to prepare an apparatus dedicated for reception or to conduct a special operation for reception.

The embodiment may be realized by software using programs or by hardware using electronic circuits, etc.

In the above, the embodiment has been described in which, when the main image such as a message is transmitted, it is possible to see an image combined with, for example, a sketch or a kansei data with being superimposed on a television broadcasting. The invention is not restricted to this. For example, the process information may be configured so as to include timing information for designating a date and time when the processed image is to be output, and the processing means may be configured so as to conduct the process with considering also the timing information so that the processed image is output at the designated date and time. According to this configuration, the message or the like can be shown to the receiver at the date and time desired by the sender.

In the embodiment, as an example of reproduction of a color image in the reception side, the case where a colored picture is used in the transmission side has been described. The invention is not restricted to this. Alternatively, for example, transmission may be conducted without coloring a picture on a sheet. In the alternative, in the case where a type in which coloring information is previously printed as process information on a sheet is used, it is more preferable to attach an image figure showing a picture which is to be formed as a result of the application of the coloring process in the reception side, in addition to a sheet which is to be actually used in transmission.

As apparent from the above description, the invention has an advantage that, as compared with the prior art, information can be transmitted more easily by using a simple communication apparatus.

### Industrial Applicability

As described above, for example, the television broadcasting receiving device of the invention receives an image data to which process information is added and which is transmitted from a simple communication apparatus such as a conventional facsimile apparatus, and therefore multimedia information such as a color image or a moving image can be reproduced on the basis of the process information, in addition to a message data

## Claims

1. A receiving device characterized in that said device comprises:
receiving means for receiving image information transmitted from a transmitting device which, from a display medium carrying a main image to be transmitted and an image of process information of the main image, reads the images on the display medium as an image information, and which transmits the read image information;
process information fetching means for fetching the process information from the received image information;
processing means for, on the basis of the fetched process information, processing the main image included in the image information; and
outputting means for outputting the processed image.

2. A receiving device according to claim 1, and characterized in that
the image of process information is indicated by a bar code, a mark, or one or plural numerals,
said image reading means has scanning means for optically reading the image information, and
said transmitting means transmits the read image information by using a telephone line.

3. A receiving device according to claim 2, and characterized in that
the main image to be transmitted is characters, symbols, numerals, a pattern, and/or a picture, and handwritten on the display medium or previously produced on the display medium, and
the image of process information is handwritten on the display medium or previously produced on the display medium.

4. A receiving device according to claim 1, and characterized in that
said device further comprises television broadcasting receiving means for receiving a television broadcasting, and
said outputting means has displaying means for displaying the processed image and/or the television broadcasting on a screen.

5. A receiving device according to claim 4, and characterized in that said image information is transmitted in the form of a facsimile through a telephone line.

6. A receiving device according to claim 1, and characterized in that the process information includes timing information for designating a date and time when the processed image is to be output, and the processed image is output at the designated date and time.

7. A receiving device according to any one of claims 1 to 6, and characterized in that
said device further comprises storing means for storing plural images and/or sounds,
said process information has an identifier for identifying the images and/or sounds, and
said processing means checks said storing means by using the identifier, extracts an image and/or a sound corresponding to the identifier, and combines the extracted image and/or sound with the received main image.

8. A receiving device according to claim 7, and characterized in that a data stored in said storing means is a kansei data representing contents of sensibility born by a person who intends to send the main image to be transmitted, or a sketch.

9. A receiving device according to claim 8, and characterized in that the kansei data is a picture which schematically represents an expression of a person, a color, or a sound.

10. A receiving device according to any one of claims 1 to 6, and characterized in that
the process information has a color identifier for designating a color to be put on the main image, and a region identifier for designating a colored region of the color, and
said processing means conducts a coloring process so that a region of the main image designated by the region identifier has a color which is predetermined in correspondence with the color identifier.

11. A receiving device according to any one of claims 1 to 6, and characterized in that
the process information has a movement identifier for designating a movement to be applied to the main image, and a region identifier for designating a region of the main image, and
said processing means conducts a moving image process so that the image designated by the region identifier makes a movement which is predetermined in correspondence with the movement identifier.

12. A transmission/reception method characterized in that:
from a display medium carrying a main image to be transmitted and an image of process information of the main image, the images on the display medium are read by image reading means as image information;
the read image information is transmitted by transmitting means;
the image information transmitted from said transmitting means is received by receiving means;
the process information is fetched from the received image information by process information fetching means;
the main image included in the image information is processed by processing means on the basis of the fetched process information; and
the processed image is output by outputting means.

13. An information storage device characterized in that said device comprises:
receiving means for receiving inputs of a message identifier for specifying one of plural predetermined messages, a kansei data identifier for specifying one of plural kansei data indicative of contents of sensibility of a person who intends to provide the message, and output date and time information which designates a date and time when the specified message and kansei data are to be output;
message storing means for previously storing the plural messages with being correlated with the message identifier;
kansei data storing means for previously storing the plural kansei data with being correlated with the kansei data identifier; and
output controlling means for, on the basis of the received message identifier, extracting the corresponding message from said message storing means, for, on the basis of the received kansei data identifier, extracting the kansei data from said kansei data storing means, and for combining the extracted message and kansei data with each other and outputting the combined data at the date and time.

14. An information storage device according to claim 13, and characterized in that
said device further comprises control data storing means for previously storing plural kinds of output control data for specifying a manner of outputting the message and/or the kansei data, the output control data being correlated with control identifiers for identifying the output control data,
said receiving means receives also the control identifier in addition to the two identifiers which are input, and
said output controlling means extracts the corresponding output control data, on the basis of the received control identifier, and, when the extracted message and the kansei data are to be combined with each other and/or when the output is to be conducted, conducts the output by using the extracted output control data.

15. An information storage device according to claim 13 or 14, and characterized in that the data received by said receiving means is input by means of external transmission.

16. A television broadcasting receiving device characterized in that said device comprises:
an information storage device according to claim 13, 14, or 15;
television broadcasting receiving means for receiving a television broadcasting; and
television displaying for, in addition to the received television broadcasting, displaying also the combinedly output data.

17. An information storage method characterized in that:
inputs of a message identifier for specifying one of plural predetermined messages, a kansei data identifier for specifying one of plural kansei data indicative of contents of sensibility of a person who intends to provide the message, and output date and time information which designates a date and time when the specified message and kansei data are to be output are accepted by accepting means, and the plural messages are previously stored by message storing means with being correlated with the message identifier;
the plural kansei data are previously stored by kansei data storing means with being correlated with the kansei data identifier; and
on the basis of the received message identifier, the corresponding message is extracted from said message storing means, and, on the basis of the received kansei data identifier, the corresponding kansei data is extracted from said kansei data storing means, and the extracted message and kansei data are combined with each other and output at the date and time.
